# EUROPEAN PATENT APPLICATION

(11) **EP 1 675 379 A1**
(43) Date of publication of application: **28.06.2006**
(21) Application number: 05257971.1
(22) Date of filing: 22.12.2005
(51) Int. Cl.: H04N 1/401, B41J 2/21

(54) **Printing device and printing method**

(30) Priority: 27.12.2004 JP 2004375702; 09.09.2005 JP 2005261828
(71) Applicant: SEIKO EPSON CORPORATION, Shinjuku-ku, Tokyo 163-0811 (JP)
(72) Inventor: Sakai, Hiroaki c/o Seiko Epson Corporation, Nagno-ken 392-8502 (JP)
(74) Representative: Cloughley, Peter Andrew

(57) **Abstract**

A printing device includes: an N-ary data generating unit that N-arizes (N≥2) image data, which is a set of Mary pixel values (M>N) forming an image, for each pixel and thus generates N-ary image data; a print data generating unit that generates print data in which a dot size corresponding to each of the pixel values of the N-ary image data generated by the N-ary data generating unit is set; and a print unit that executes print based on the print data generated by the print data generating unit; wherein when a dot size of a predetermined range continues in the print data, the print data generating unit generates print data in which the dot size corresponding to one of the pixels of the continuous dots is changed.

## Description

### BACKGROUND

### 1. Technical Field

This invention relates to a printing device exemplified by a printer of a facsimile device, copy machine, office automation device or the like, a print program, a printing method, an image processing device, an image processing program, an image processing method, and a storage medium storing the same program. Particularly, the invention is suitable for a printing device of an ink jet system that ejects liquid ink particles of plural colors onto a print sheet (print medium) to write/draw a predetermined character or image, a print program, a printing method, an image processing device, an image processing program, an image processing method and a storage medium storing the same program.

### 2. Related Art

Hereinafter, a printing device, particularly a printer employing an ink jet system (hereinafter referred to as "ink jet printer"), will be described.

Ink jet printers are generally inexpensive and easily provide a color print of high quality. Therefore, as personal computers, digital cameras have become popular, ink jet printers have been broadly popularized not only in office but also among general users.

In such an ink jet printer, generally, a moving unit, called carriage, which has an ink cartridge and a print head integrally provided therein, ejects (or jets) liquid ink particles in dot shapes from its print head nozzle while moving back and forth on a print medium (sheet) in a direction perpendicular to the paper feed direction, thereby writing/drawing a predetermined character or image on the print medium and thus producing a desired print. As an ink cartridge containing four colors including black (black, yellow, magenta and cyan) and print heads for the individual colors are provided in this carriage, not only monochromic print but also full-color print as a result of combination of the colors can be easily made. (Moreover, a six-color or seven-color ink cartridge additionally including light cyan and light magenta as well as an eight-color ink cartridge has been practically used.)

In an ink jet printer of such a type that print is performed while moving the print heads on the carriage back and forth in the direction perpendicular to the paper feed direction, the print heads must be moved back and forth several tens times to over 100 times in order to clearly print the whole page. Therefore, there is a problem that the print time is significantly longer than in a printing device of another system, for example, a laser printer using an electrophotographic technique as in a copy machine. The ink jet printer of this system is generally called "multipath printer" or "serial printer".

On the contrary, in an ink jet printer of such a type that a print head having the same length as (or longer than) the width of the print sheet is arranged and no carriage is used, the print head need not be moved in the direction of the width of the print sheet and so-called single-scan (single-path) print can be made. Therefore, high-speed print as in the laser printer is possible. Also, since a carriage carrying a print head and a driving system that drives the carriage are not necessary, it is possible to reduce the size and the weight of the printer casing and there is also an advantage that quietness improves significantly. The ink jet printer of this type is generally called "line-head printer".

Meanwhile, in a print head, which is indispensable such an ink jet printer, minute nozzles with a diameter of approximately 10 to 70 µm are arranged at predetermined spacing in one line or in plural lines perpendicular to the direction of arrangement of the nozzles of the print head. Therefore, because of errors in manufacturing, the direction of ink ejection from some of the nozzles is inclined or the positions of the nozzles are deviated from their ideal positions, causing a so-called "flight curving phenomenon", that is, the landing position of a dot formed by such a nozzle is deviated from the target point.

As a result, a print defect that is so-called "banding (streak) phenomenon" may occur in the part printed by using the defective nozzle, thus significantly lowering the print quality. Specifically, if a "flight curving phenomenon" occurs, the distance between dots ejected by nozzles that are next to each other become uneven. In a part where the distance between dots ejected by nozzles that are next to each other is long, "white streaks (if the print sheet is white)" occur. In a part where the distance between dots ejected by nozzles that are next to each other is short, "dark streaks" occur.

Particularly, such a banding phenomenon tends to occur much more in the "line-head printer" where the print head or the print medium is fixed (single-path print), than in the "multipath printer" (serial printer) as described above. (The multipath printer employs a technique of using back and force movement of the print head many times so as to make the banding inconspicuous.)

Therefore, in order to prevent a kind of print defect due to such "banding phenomenon", research and development in terms of so-called hardware have been actively made, such as improvement in the manufacturing technique for the print head and improvement in the design. However, because of the manufacturing cost, technical aspects and the like, it is difficult to provide a print head that eliminates the "banding phenomenon" 100%.

Thus, under the present condition, a technique of reducing such "banding phenomenon" by using so-called software-like method such as print control that will be described hereinafter is used together with the improvement in the hardware part as described above.

For example, in "Ink Jet Recording Device and Ink Jet Recording Method" of JP-A-6-340094, the size of dots in the nozzle arrangement direction of the print heat is the same, whereas the size of dots in the driving direction of the print head (perpendicular to the nozzle arrangement direction) is changed irregularly, thereby reducing "banding" extending perpendicularly to the nozzle arrangement direction.

However, in the foregoing technique, since the dot size is decided irregularly, if small dots continue, it may be difficult in some cases to reduce "white streaks" occurring near these dots. Also, when printing at the same density, density difference may occur, that is, the density may partially change in a zone that should have uniform density, and the print quality may be lowered.

Thus, the invention is proposed to effectively solve these problems and it is an advantage of some aspects of the invention to provide a new printing device that can eliminate the banding phenomenon due to the flight curving phenomenon or make it almost imperceptible, a print program, a printing method, an image processing device, an image processing program, an image processing method, and a storage medium storing the same program.

It is another advantage of some aspects of the invention to provide a new printing device that can eliminate density difference, a print program, a printing method, an image processing device, an image processing program, an image processing method, and a storage medium storing the same program.

### SUMMARY

Mode 1: In order to solve the above-described problems, a printing device according to mode 1 includes: an N-ary data generating unit that N-arizes (N≥2) image data, which is a set of M-ary pixel values (M>N) forming an image, for each pixel and thus generates N-ary image data; a print data generating unit that generates print data in which a dot size corresponding to each of the pixel values of the N-ary image data generated by the N-ary data generating unit is set; and a print unit that executes print based on the print data generated by the print data generating unit; wherein when a dot size of a predetermined range continues in the print data, the print data generating unit generates print data in which the dot size corresponding to one of the pixels of the continuous dots is changed.

Since this prevents continuation of the dots of the size of the predetermined range, the banding phenomenon generated by so-called flight curving phenomenon can be effectively eliminated or made almost imperceptible.

The "dot" in this description refers to a fundamental unit representing a character or pattern of a print and to one zone where ink ejected from one or plural nozzles landed on a medium. This "dot" has a predetermined size (area), not an area 0, and plural types of dots exist depending on the size. Also, the dot shape need not necessarily be round and it includes other shapes than round, like elliptic. In such case, since the diameter is not uniform, the dot size is decided on the basis of the area occupied by the dot or average diameter. (This also applies to the following description of modes for "printing device", modes for "print program", modes for "printing method", modes for "image processing device", modes for "image processing program", modes for "image processing method", modes for "storage medium storing the same program", and the best mode for carrying out the invention.)

To define this "dot diameter" more strictly, a round equivalent dot having the same area as a dot formed by ejecting a certain quantity of ink is assumed and the diameter of the equivalent dot is regarded as the dot diameter. Also, since the absorptivity of ink generally varies depending on the print medium, if the print medium changes, the dot diameter to be formed changes variously even with the same quantity of ink. This "dot" is not necessarily limited to a dot formed by one ink drip of one ejection and includes a dot formed by a combination of ink drips of two or more ejections as in the case of an extremely large dot.

"N-arization (N≥2)" is the processing to classify M-ary image data (M>N) (for example, eight bits and 256 tone levels) into N types for each pixel on the basis of a certain rule, as will be later described in detail in the embodiments. It is an idea including change of the dot size to several levels in accordance with the magnitude of pixel value, in addition to so-called "binary" processing to or not to place a dot. (This also applies to the following description of modes for "printing device", modes for "print program", modes for "printing method", modes for "image processing device", modes for "image processing program", modes for "image processing method", modes for "storage medium storing the same program", and the best mode for carrying out the invention.)

The reason for setting this value of "N" to N≥2 is that at least binarization or more must be prescribed with respect to whether to place a dot or not, in order to generate print data. (This also applies to the following description of modes for "printing device", modes for "print program", modes for "printing method", modes for "image processing device", modes for "image processing program", modes for "image processing method", modes for "storage medium storing the same program", and the best mode for carrying out the invention.)

The "banding phenomenon" refers to such a print defect that "white streaks" or "dark streaks" are generated by the "flight curving phenomenon". (This also applies to the following description of modes for "printing device", modes for "print program", modes for "printing method", modes for "image processing device", modes for "image processing program", modes for "image processing method", modes for "storage medium storing the same program", and the best mode for carrying out the invention.)

The "flight curving phenomenon" is different from the above-described simple failure to eject ink from some nozzles, and it refers to such a phenomenon that, while ink is ejected, the direction of ejection from some nozzles is inclined or otherwise shifted, thus forming a dot at a position deviated from the target position. (This also applies to the following description of modes for "printing device", modes for "print program", modes for "printing method", modes for "image processing device", modes for "image processing program", modes for "image processing method", modes for "storage medium storing the same program", and the best mode for carrying out the invention.)

The term "white streaks" refers to a part (zone) where such a phenomenon that the distance between dots next to each other becomes longer than a predetermine distance because of the "flight curving phenomenon" occurs continuously, thus making the underlying color of the print medium conspicuous. The term "dark streaks" refers to a part (zone) where such a phenomenon that the distance between dots next to each other becomes shorter than a predetermined distance, again, because of the "flight curving phenomenon", occurs continuously, thus preventing the underlying color of the print medium from being seen, or making the part relatively dark because of the reduced distance between dots, or causing a part of a deviated dot to overlap with a normal dot and making the overlapping part conspicuous as dark streaks. (This also applies to the following description of modes for "printing device", modes for "print program", modes for "printing method", modes for "image processing device", modes for "image processing program", modes for "image processing method", modes for "storage medium storing the same program", and the best mode for carrying out the invention.)

The "dot size of a predetermined range" is defined as follows. For example, if there are 16 types of dot sizes including "no dot", and if "no dot" is defined as "1", "the smallest dot" is defined as "2" "the next large dot" is defined as "3", ..., and "the largest dot" is defined as "16", the predetermined range is defined as "3" to "10" or "1" to "6", and the size equal to or less than the predetermined range is defined as "10" or less, or "12" or less. (This also applies to the following description of modes for "printing device", modes for "print program", modes for "printing method", modes for "image processing device", modes for "image processing program", modes for "image processing method", modes for "storage medium storing the same program", and the best mode for carrying out the invention.)

The term "continuous" refers to a case where two or more dots continue. (This also applies to the following description of modes for "printing device", modes for "print program", modes for "printing method", modes for "image processing device", modes for "image processing program", modes for "image processing method", modes for "storage medium storing the same program", and the best mode for carrying out the invention.)

The term "one of the pixels" refers to, for example, if two pixels continue, either one of the pixels, or if three pixels continue, one of these pixels. (This also applies to the following description of modes for "printing device", modes for "print program", modes for "printing method", modes for "image processing device", modes for "image processing program", modes for "image processing method", modes for "storage medium storing the same program", and the best mode for carrying out the invention.)

Mode 2: A printing device according to mode 2 includes: an N-ary data generating unit that N-arizes (N≥2) image data, which is a set of M-ary pixel values (M>N) forming an image, for each pixel and thus generates N-ary image data; a print data generating unit that generates print data in which a dot size corresponding to each of the pixel values of the N-ary image data generated by the N-ary data generating unit is set; and a print unit that executes print based on the print data generated by the print data generating unit; wherein when a dot size smaller than a predetermined size continues in the print data, the print data generating unit generates print data in which the dot size corresponding to one of the pixels of the continuous dots is changed to the predetermined size or larger.

Since this prevents continuation of the dots smaller than the predetermined size, the banding phenomenon generated by so-called flight curving phenomenon can be effectively eliminated or made almost imperceptible.

Mode 3: A printing device according to mode 3 includes: an N-ary data generating unit that N-arizes (N≥2) image data, which is a set of M-ary pixel values (M>N) forming an image, for each pixel and thus generates N-ary image data; a print data generating unit that generates print data in which a dot size corresponding to each of the pixel values of the N-ary image data generated by the N-ary data generating unit is set; and a print unit that executes print based on the print data generated by the print data generating unit; wherein the print data generating unit has a dot size changing unit that changes the dot size of one of the pixels of the continuous dots to a predetermined size or larger when dots smaller than the predetermined size continue in the print data, an error propagating unit that propagates an error of pixel value of the pixel generated by the dot size change by the dot size changing unit to an unprocessed pixel, and a dot size resetting unit that resets the dot size of the pixel to which the error is propagated by the error propagating unit.

That is, in this mode, not only the dot size is changed in order to prevent continuation of dots smaller than the predetermined size as in the above-described mode 1, but also the error of pixel value generated by the dot size change is propagated to and used for an unprocessed pixel in the next main scanning line.

This makes it possible to maintain the area tone in the peripheral zone where the dot size conversion is done, to approximately the same level as the original area tone, and to acquire a print of high quality with less density difference.

The "unprocessed pixel" refers to particularly an unprocessed pixel next to the processing target pixel. (This also applies to the following description of modes for "printing device", modes for "print program", modes for "printing method", modes for "image processing device", modes for "image processing program", modes for "image processing method", modes for "storage medium storing the same program", and the best mode for carrying out the invention.)

Mode 4: A printing device according to mode 4 includes: an N-ary data generating unit that N-arizes (N≥2) image data, which is a set of M-ary pixel values (M>N) forming an image, for each pixel and thus generates N-ary image data; a print data generating unit that generates print data in which a dot size corresponding to the pixel value of the N-ary image data generated by the N-ary data generating unit is set; and a print unit that executes print based on the print data generated by the print data generating unit; wherein the N-ary data generating unit has an N-arization adjusting unit that adjusts the N-arization of the pixel value when dots are arranged next to each other with the dot size corresponding to the pixel value being equal to or less than a predetermined size, and an error propagating unit that propagates to an unprocessed pixel an error of pixel value generated when the N-arization is performed by the N-arization adjusting unit.

That is, in this mode, when dots of a predetermined size or less continue in the N-arization of the M-ary image data, the N-arization is adjusted to prevent continuation of dots of the predetermined size or less and the error generated by the adjustment is propagated to the neighboring unprocessed pixel.

This makes it possible to avoid occurrence of banding due to the continuation of dots of a predetermined size or less as in the above-described mode 2 and to maintain the area tone in the peripheral zone where the dot size conversion is performed to approximately the same level as the original area tone. Thus, a print of high quality having less density difference can be provided. Also, since the dot size is adjusted to the intended pixel value during the N-arization, dot size change is not necessary when generating the print data, and the processing efficiency improves.

Mode 5: A printing device according to mode 5 includes: an N-ary data generating unit that N-arizes (N≥2) image data, which is a set of M-ary pixel values (M>N) forming an image, for each pixel and thus generates N-ary image data; a print data generating unit that generates print data in which a dot size corresponding to the pixel value of the N-ary image data generated by the N-ary data generating unit is set; and a print unit that executes print based on the print data generated by the print data generating unit; wherein the N-ary data generating unit has an N-arization adjusting unit that adjusts the N-arization when dots are arranged next to each other with the dot size corresponding to the pixel value being within a predetermined range, and an error propagating unit that propagates to an unprocessed pixel an error of pixel value generated when the N-arization is performed by the N-arization adjusting unit.

That is, in this mode, when dots of a predetermined range continue in the N-arization of the M-ary image data, the N-arization is adjusted to prevent continuation of dots of the predetermined range and the error generated by the adjustment is propagated to the neighboring unprocessed pixel.

This makes it possible to avoid occurrence of banding due to the continuation of dots of a predetermined range and to maintain the area tone in the peripheral zone where the dot size conversion is performed to approximately the same level as the original area tone. Thus, a print of high quality having less density difference can be provided. Also, since the dot size is adjusted to the intended pixel value during the N-arization, dot size change is not necessary when generating the print data, and the processing efficiency improves.

Mode 6: As a printing device according to mode 6, in the printing device according to mode 4 or 5, the N-ary data generating unit also has an error spreading unit that, when a target pixel of the image data is N-arized, spreads the error of pixel value to an unprocessed pixel around the target pixel.

As the error spreading technique, which is one of known half-tone processing techniques, is thus used in the N-arization of the target pixel, the error generated by the N-arization is allotted to the peripheral pixels in accordance with a predetermined error spreading matrix and its influence is considered in the subsequent processing, thus minimizing the overall error. Therefore, a print of high image quality that represents half tone with high fidelity can be securely provided.

The term "error spreading" used here in the invention is the same as the processing that is normally used in the field of image processing. It refers to the processing to allot an error generated by binarization of a certain pixel to peripheral pixels in accordance with a predetermined error spreading matrix and to consider its influence in the subsequent processing, thus minimizing the overall error. For example, if the pixel value of a target pixel is larger than an intermediate value of a half of the number of tone levels of the image, it is classified as black. If the pixel value is smaller than the intermediate value, it is classified as white. After that, the error between the pixel value before the classification and the pixel value after the classification is dispersed to the peripheral pixels at an appropriate rate, thus making adjustment. (This also applies to the following description of modes for "printing device", modes for "print program", modes for "printing method", modes for "image processing device", modes for "image processing program", modes for "image processing method", modes for "storage medium storing the same program", and the best mode for carrying out the invention.)

Also by using a dither technique, which is one of the known half-tone processing techniques similar to the "error spreading technique", a print of high image quality that represents half tone with high fidelity can be securely provided.

This "dither technique" is, again, the same as the technique that is normally used in the field of image processing. For example, the pixel value of a target pixel of an image is compared with the numeric value of each pixel of a dither matrix that is prepared in advance. If the pixel value of the target pixel is larger, it is decided as black. If the pixel value of the target pixel is smaller, it is decided as white. The pixels are thus classified into white and black.

Mode 7: A print program according to mode 7 causes a computer to function as: an N-ary data generating unit that N-arizes (N≥2) image data, which is a set of M-ary pixel values (M>N) forming an image, for each pixel and thus generates N-ary image data; and a print data generating unit that generates print data in which a dot size corresponding to each of the pixel values of the N-ary image data generated by the N-ary data generating unit is set. The program also causes the print data generating unit to function, when a dot size of a predetermined range continues in the print data, to generate print data in which the dot size corresponding to one of the pixels of the continuous dots is changed.

Thus, as in mode 1, the banding is reduced and the banding phenomenon due to the flight curving phenomenon can be eliminated or made almost imperceptible.

Also, most printing devices such as ink jet printers that are currently available in the market have a computer system including a central processing unit (CPU), storage units (RAM, ROM), an input unit and the like, and can realize each of the above-described units on software by using the computer system. Therefore, each of the above-described units can be realized more economically and easily than when preparing dedicated hardware to realize each unit.

Moreover, by rewriting a part of the program, version up based on functional modifications and improvements can be easily carried out.

Mode 8: A print program according to mode 8 causes a computer to function as: an N-ary data generating unit that N-arizes (N≥2) image data, which is a set of M-ary pixel values (M>N) forming an image, for each pixel and thus generates N-ary image data; and a print data generating unit that generates print data in which a dot size corresponding to each of the pixel values of the N-ary image data generated by the N-ary data generating unit is set. The program also causes the print data generating unit to function, when a dot size smaller than a predetermined size continues in the print data, to generate print data in which the dot size corresponding to one of the pixels of the continuous dots is changed to the predetermined size or larger.

Thus, as in mode 2, the banding phenomenon due to the flight curving phenomenon can be eliminated or made almost imperceptible.

Also, as in mode 7, since each of the above-described units can be realized on software by directly using a computer system provided in most printing devices that are currently available in the market, each unit can be realized more economically and easily than when preparing dedicated hardware to realize each unit. Moreover, by rewriting a part of the program, version up based on functional modifications and improvements can be easily carried out.

Mode 9: A print program according to mode 9 causes a computer to function as: an N-ary data generating unit that N-arizes (N≥2) image data, which is a set of M-ary pixel values (M>N) forming an image, for each pixel and thus generates N-ary image data; and a print data generating unit that generates print data in which a dot size corresponding to each of the pixel values of the N-ary image data generated by the N-ary data generating unit is set. The program also causes the print data generating unit to function as: a dot size changing unit that, when a dot size smaller than a predetermined size continues in the print data, changes the dot size corresponding to one of the pixels of the continuous dots to the predetermined dot size or larger; an error propagating unit that propagates an error of pixel value of the pixel generated by the dot size change by the dot size changing unit to an unprocessed pixel; and a dot size resetting unit that resets the dot size of the pixel to which the error is propagated by the error propagating unit.

Thus, as in mode 3, the banding phenomenon due to the flight curving phenomenon can be eliminated or made almost imperceptible.

Also, as in mode 7, since each of the above-described units can be realized on software by directly using a computer system provided in most printing devices that are currently available in the market, each unit can be realized more economically and easily than when preparing dedicated hardware to realize each unit. Moreover, by rewriting a part of the program, version up based on functional modifications and improvements can be easily carried out.

Mode 10: A print program according to mode 10 causes a computer to function as: an N-ary data generating unit that N-arizes (N≥2) image data, which is a set of M-ary pixel values (M>N) forming an image, for each pixel and thus generates N-ary image data; and a print data generating unit that generates print data in which a dot size corresponding to the pixel value of the N-ary image data generated by the N-ary data generating unit is set. The program also causes the N-ary data generating unit to function as: an N-arization adjusting unit that adjusts the N-arization of the pixel value when dots are arranged next to each other with the dot size corresponding to the pixel value being equal to or less than a predetermined size, and an error propagating unit that propagates to an unprocessed pixel an error of pixel value generated when the N-arization is performed by the N-arization adjusting unit.

Thus, as in mode 4, the banding phenomenon due to the flight curving phenomenon can be eliminated or made almost imperceptible.

Also, as in mode 7, since each of the above-described units can be realized on software by directly using a computer system provided in most printing devices that are currently available in the market, each unit can be realized more economically and easily than when preparing dedicated hardware to realize each unit. Moreover, by rewriting a part of the program, version up based on functional modifications and improvements can be easily carried out.

Mode 11: A print program according to mode 11 causes a computer to function as: an N-ary data generating unit that N-arizes (N≥2) image data, which is a set of M-ary pixel values (M>N) forming an image, for each pixel and thus generates N-ary image data; and a print data generating unit that generates print data in which a dot size corresponding to the pixel value of the N-ary image data generated by the N-ary data generating unit is set. The program also causes the N-ary data generating unit to function as: an N-arization adjusting unit that adjusts the N-arization of the pixel value when dots are arranged next to each other with the dot size corresponding to the pixel value being within a predetermined range, and an error propagating unit that propagates to an unprocessed pixel an error of pixel value generated when the N-arization is performed by the N-arization adjusting unit.

Thus, as in mode 5, the banding phenomenon due to the flight curving phenomenon can be eliminated or made almost imperceptible.

Also, as in mode 7, since each of the above-described units can be realized on software by directly using a computer system provided in most printing devices that are currently available in the market, each unit can be realized more economically and easily than when preparing dedicated hardware to realize each unit. Moreover, by rewriting a part of the program, version up based on functional modifications and improvements can be easily carried out.

Mode 12: As a print program according to mode 12, in the print program according to mode 10 or 11, the N-ary data generating unit is caused to function to, when a target pixel of the image data is N-arized, spreads the error of pixel value to an unprocessed pixel around the target pixel.

Thus, as in mode 6, since the error generated in the N-arization of the target pixel is spread to the peripheral unprocessed pixel and the area tone in the peripheral zone can be maintained to approximately the same level as the original area tone, a print of high image quality that represents half tone with high fidelity can be securely provided.

Also, as in mode 7, since each of the above-described units can be realized on software by directly using a computer system provided in most printing devices that are currently available in the market, each unit can be realized more economically and easily than when preparing dedicated hardware to realize each unit. Moreover, by rewriting a part of the program, version up based on functional modifications and improvements can be easily carried out.

Mode 13: A computer-readable storage medium according to mode 13 is a computer-readable storage medium storing the print program according to one of modes 7 to 12.

Thus, using a computer-readable storage medium such as CD-ROM, DVD-ROM, flexible disk or semiconductor chip, the print program according to one of the above-described modes 7 to 12 can be easily and securely provided to a person who demands the program.

Mode 14: A printing method according to mode 14 includes: N-arizing (N≥2) image data, which is a set of M-ary pixel values (M>N) forming an image, for each pixel and thus generating N-ary image data; generating print data in which a dot size corresponding to each of the pixel values of the N-ary image data generated by the generation of the N-ary data generation; and executing print based on the print data generated by the generation of the print data; wherein the generation of the print data includes, when a dot size of a predetermined range continues in the print data, generating print data in which the dot size corresponding to one of the pixels of the continuous dots is changed.

Since this prevents continuation of the dots of the size of the predetermined range as in mode 1, "white streaks" due to the banding phenomenon generated by so-called flight curving phenomenon can be effectively eliminated or made almost imperceptible.

The unit that mainly handles the generation of the N-ary data and the generation of the print data is, for example, a central processing unit (CPU) of a computer system. The unit that mainly handles the printing is an output device such as a print mechanism of a printer. (This applies also to the following description of modes for "printing method", modes for "image processing device", modes for "image processing method", and the best mode for carrying out the invention.)

Mode 15: A printing method according to mode 15 includes: N-arizing (N≥2) image data, which is a set of M-ary pixel values (M>N) forming an image, for each pixel and thus generating N-ary image data; generating print data in which a dot size corresponding to each of the pixel values of the N-ary image data generated by the generation of the N-ary data is set; and executing print based on the print data generated by the generation of the print data; wherein the generation of the print data includes, when a dot size smaller than a predetermined size continues in the print data, changing the dot size corresponding to one of the pixels of the continuous dots to the predetermined size or larger, propagating an error of pixel value of the pixel generated by the dot size change to an unprocessed pixel, and resetting the dot size of the pixel to which the error is propagated.

Since this prevents continuation of the dots smaller than the predetermined size as in mode 2, the banding phenomenon generated by so-called flight curving phenomenon can be effectively eliminated or made almost imperceptible.

Mode 16: A printing method according to mode 16 includes: N-arizing (N≥2) image data, which is a set of M-ary pixel values (M>N) forming an image, for each pixel and thus generating N-ary image data; generating print data in which a dot size corresponding to the pixel value of the N-ary image data generated by the generation of the N-ary data is set; and executing print based on the print data generated by the generation of the print data; wherein the generation of the N-ary data includes adjusting the N-arization of the pixel value when dots are arranged next to each other with the dot size corresponding to the pixel value being equal to or less than a predetermined size, and propagating to a next unprocessed pixel an error of pixel value generated when the N-arization is performed by the N-arization adjustment.

Thus, as in mode 3, the area tone in the peripheral zone where dot size conversion is performed can be maintained to approximately the same level as the original area tone and a print of high quality with less density difference can be provided.

Mode 17: A printing method according to mode 17 includes: N-arizing (N≥2) image data, which is a set of M-ary pixel values (M>N) forming an image, for each pixel and thus generating N-ary image data; generating print data in which a dot size corresponding to the pixel value for each target pixel of the N-ary image data generated by the generation of the N-ary data is set; and executing print based on the print data generated by the generation of the print data; wherein the generation of the N-ary data includes adjusting the N-arization when the dot size corresponding to the pixels next to each other in the print data is equal to or less than a predetermined size, and propagating to an unprocessed pixel an error of pixel value generated when the N-arization is performed by the N-arization adjustment.

Thus, as in the above-described mode 4, the area tone in the peripheral zone where the dot size conversion is performed can be maintained to approximately the same level as the original area tone and a print of high quality having less density difference can be provided. Also, since the dot size is adjusted to the intended pixel value during the N-arization, dot size change is not necessary when generating the print data, and the processing efficiency improves.

Mode 18: As a printing method according to mode 18, in the printing method according to mode 17, the generation of the N-ary data includes, when a target pixel of the image data is N-arized, spreading the error of pixel value to an unprocessed pixel around the target pixel.

Thus, as in the above-described mode 6, the error generated by the N-arization is allotted to the peripheral pixels in accordance with a predetermined error spreading matrix and its influence is considered in the subsequent processing, thus minimizing the overall error. Therefore, a print of high image quality that represents half tone with high fidelity can be securely provided.

Mode 19: An image processing device according to mode 19 includes: an N-ary data generating unit that N-arizes (N≥2) image data, which is a set of M-ary pixel values (M>N) forming an image, for each pixel and thus generates N-ary image data; and a print data generating unit that generates print data in which a dot size corresponding to each of the pixel values of the N-ary image data generated by the N-ary data generating unit is set; wherein when a dot size of a predetermined range continues in the print data, the print data generating unit generates print data in which the dot size corresponding to one of the pixels of the continuous dots is changed.

Since this prevents continuation of the dots of the size of the predetermined range as in mode 1, the banding phenomenon generated by so-called flight curving phenomenon can be effectively eliminated or made almost imperceptible. Also, since each unit can be realized on software, it can be realized by an information processing device such as general-purpose computer.

Mode 20: An image processing device according to mode 20 includes: an N-ary data generating unit that N-arizes (N≥2) image data, which is a set of M-ary pixel values (M>N) forming an image, for each pixel and thus generates N-ary image data; and a print data generating unit that generates print data in which a dot size corresponding to each of the pixel values of the N-ary image data generated by the N-ary data generating unit is set; wherein when a dot size smaller than a predetermined size continues in the print data, the print data generating unit generates print data in which the dot size corresponding to one of the pixels of the continuous dots is changed to the predetermined size or larger.

Since this prevents continuation of the dots smaller than the predetermined size, the banding phenomenon generated by so-called flight curving phenomenon can be effectively eliminated or made almost imperceptible. Also, since each unit can be realized on software, it can be realized by an information processing device such as general-purpose computer.

Mode 21: An image processing device according to mode 21 includes: an N-ary data generating unit that N-arizes (N≥2) image data, which is a set of M-ary pixel values (M>N) forming an image, for each pixel and thus generates N-ary image data; and a print data generating unit that generates print data in which a dot size corresponding to each of the pixel values of the N-ary image data generated by the N-ary data generating unit is set; wherein the print data generating unit has a dot size changing unit that changes the dot size of one of the pixels of the continuous dots to a predetermined size or larger when dots smaller than the predetermined size continue in the print data, an error propagating unit that propagates an error of pixel value of the pixel generated by the dot size change by the dot size changing unit to an unprocessed pixel, and a dot size resetting unit that resets the dot size of the pixel to which the error is propagated by the error propagating unit.

This makes it possible to maintain area tone in the peripheral zone where the dot size conversion is done, to approximately the same level as the original area tone, and to provide a print of high quality with less density difference. Also, since each unit can be realized on software, it can be realized by an information processing device such as general-purpose computer.

Mode 22: An image processing device according to mode 22 includes: an N-ary data generating unit that N-arizes (N≥2) image data, which is a set of M-ary pixel values (M>N) forming an image, for each pixel and thus generates N-ary image data; and a print data generating unit that generates print data in which a dot size corresponding to the pixel value of the N-ary image data generated by the N-ary data generating unit is set; wherein the N-ary data generating unit has an N-arization adjusting unit that adjusts the N-arization of the pixel value when dots are arranged next to each other with the dot size corresponding to the pixel value being equal to or less than a predetermined size, and an error propagating unit that propagates to an unprocessed pixel an error of pixel value generated when the N-arization is performed by the N-arization adjusting unit.

This makes it possible to maintain the area tone in the peripheral zone where the dot size conversion is performed to approximately the same level as the original area tone and to provide a print of high quality having less density difference. Also, since each unit can be realized on software, it can be realized by an information processing device such as general-purpose computer.

Mode 23: An image processing device according to mode 23 includes: an N-ary data generating unit that N-arizes (N≥2) image data, which is a set of M-ary pixel values (M>N) forming an image, for each pixel and thus generates N-ary image data; and a print data generating unit that generates print data in which a dot size corresponding to the pixel value of the N-ary image data generated by the N-ary data generating unit is set; wherein the N-ary data generating unit has an N-arization adjusting unit that adjusts the N-arization when dots are arranged next to each other with the dot size corresponding to the pixel value being within a predetermined range, and an error propagating unit that propagates to an unprocessed pixel an error of pixel value generated when the N-arization is performed by the N-arization adjusting unit.

This makes it possible to maintain the area tone in the peripheral zone where the dot size conversion is performed to approximately the same level as the original area tone and to provide a print of high quality having less density difference. Also, since each unit can be realized on software, it can be realized by an information processing device such as general-purpose computer.

Mode 24: As an image processing device according to mode 24, in the image processing device according to mode 22 or 23, the N-ary data generating unit also has an error spreading unit that, when a target pixel of the image data is N-arized, spreads the error of pixel value to an unprocessed pixel around the target pixel.

Thus, as in the above-described mode 5, the error generated by the N-arization is allotted to the peripheral pixels in accordance with a predetermined error spreading matrix and its influence is considered in the subsequent processing, thus minimizing the overall error. Therefore, a print of high image quality that represents half tone with high fidelity can be securely provided. Also, since each unit can be realized on software, it can be realized by an information processing device such as general-purpose computer.

Mode 25: An image processing program according to mode 25 causes a computer to function as: an N-ary data generating unit that N-arizes (N≥2) image data, which is a set of M-ary pixel values (M>N) forming an image, for each pixel and thus generates N-ary image data; and a print data generating unit that generates print data in which a dot size corresponding to each of the pixel values of the N-ary image data generated by the N-ary data generating unit is set. The program also causes the print data generating unit to function, when a dot size of a predetermined range continues in the print data, to generate print data in which the dot size corresponding to one of the pixels of the continuous dots is changed.

Thus, the banding phenomenon due to the flight curving phenomenon can be eliminated or made almost imperceptible.

Also, since each of the units can be realized on software by using a general-purpose computer system such as personal computer (PC), each of the units can be realized more economically and easily than when preparing dedicated hardware to realize each unit. Moreover, by rewriting a part of the program, version up based on functional modifications and improvements can be easily carried out.

Mode 26: An image processing program according to mode 26 causes a computer to function as: an N-ary data generating unit that N-arizes (N≥2) image data, which is a set of M-ary pixel values (M>N) forming an image, for each pixel and thus generates N-ary image data; and a print data generating unit that generates print data in which a dot size corresponding to each of the pixel values of the N-ary image data generated by the N-ary data generating unit is set. The program also causes the print data generating unit to function, when a dot size smaller than a predetermined size continues in the print data, to generate print data in which the dot size corresponding to one of the pixels of the continuous dots is changed to the predetermined size or larger.

Thus, the banding phenomenon due to the flight curving phenomenon can be eliminated or made almost imperceptible.

Also, as in mode 25, since each of the units can be realized on software by using a general-purpose computer system such as personal computer (PC), each unit can be realized more economically and easily than when preparing dedicated hardware to realize each unit. Moreover, by rewriting a part of the program, version up based on functional modifications and improvements can be easily carried out.

Mode 27: An image processing program according to mode 27 causes a computer to function as: an N-ary data generating unit that N-arizes (N≥2) image data, which is a set of M-ary pixel values (M>N) forming an image, for each pixel and thus generates N-ary image data; and a print data generating unit that generates print data in which a dot size corresponding to each of the pixel values of the N-ary image data generated by the N-ary data generating unit is set. The program also causes the print data generating unit to function as: a dot size changing unit that, when a dot size smaller than a predetermined size continues in the print data, changes the dot size corresponding to one of the pixels of the continuous dots to the predetermined dot size or larger; an error propagating unit that propagates an error of pixel value of the pixel generated by the dot size change by the dot size changing unit to an unprocessed pixel; and a dot size resetting unit that resets the dot size of the pixel to which the error is propagated by the error propagating unit.

Thus, "white streaks" and "dark streaks" are reduced and the banding phenomenon due to the flight curving phenomenon can be eliminated or made almost imperceptible.

Also, as in mode 25, since each of the units can be realized on software by using a general-purpose computer system such as personal computer (PC), each unit can be realized more economically and easily than when preparing dedicated hardware to realize each unit. Moreover, by rewriting a part of the program, version up based on functional modifications and improvements can be easily carried out.

Mode 28: An image processing program according to mode 28 causes a computer to function as: an N-ary data generating unit that N-arizes (N≥2) image data, which is a set of M-ary pixel values (M>N) forming an image, for each pixel and thus generates N-ary image data; and a print data generating unit that generates print data in which a dot size corresponding to the pixel value of the N-ary image data generated by the N-ary data generating unit is set. The program also causes the N-ary data generating unit to function as: an N-arization adjusting unit that adjusts the N-arization of the pixel value when dots are arranged next to each other with the dot size corresponding to the pixel value being equal to or less than a predetermined size, and an error propagating unit that propagates to an unprocessed pixel an error of pixel value generated when the N-arization is performed by the N-arization adjusting unit.

This makes it possible to maintain the area tone in the peripheral zone where the dot size conversion is performed to approximately the same level as the original area tone and to provide a print of high quality having less density difference. Also, since the dot size is adjusted to the intended pixel value during the N-arization, dot size change is not necessary when generating the print data, and the processing efficiency improves.

Also, as in mode 25, since each of the units can be realized on software by using a general-purpose computer system such as personal computer (PC), each unit can be realized more economically and easily than when preparing dedicated hardware to realize each unit. Moreover, by rewriting a part of the program, version up based on functional modifications and improvements can be easily carried out.

Mode 29: An image processing program according to mode 29 causes a computer to function as: an N-ary data generating unit that N-arizes (N≥2) image data, which is a set of M-ary pixel values (M>N) forming an image, for each pixel and thus generates N-ary image data; and a print data generating unit that generates print data in which a dot size corresponding to the pixel value of the N-ary image data generated by the N-ary data generating unit is set. The program also causes the N-ary data generating unit to function as: an N-arization adjusting unit that adjusts the N-arization of the pixel value when dots are arranged next to each other with the dot size corresponding to the pixel value being within a predetermined range, and an error propagating unit that propagates to an unprocessed pixel an error of pixel value generated when the N-arization is performed by the N-arization adjusting unit.

This makes it possible to maintain the area tone in the peripheral zone where the dot size conversion is performed to approximately the same level as the original area tone and to provide a print of high quality having less density difference. Also, since the dot size is adjusted to the intended pixel value during the N-arization, dot size change is not necessary when generating the print data, and the processing efficiency improves.

Also, as in mode 25, since each of the units can be realized on software by using a general-purpose computer system such as personal computer (PC), each unit can be realized more economically and easily than when preparing dedicated hardware to realize each unit. Moreover, by rewriting a part of the program, version up based on functional modifications and improvements can be easily carried out.

Mode 30: As an image processing program according to mode 30, in the image processing program according to mode 28 or 29, the generation of the N-ary data includes, when a target pixel of the image data is N-arized, spreading the error of pixel value to an unprocessed pixel around the target pixel.

Thus, as in mode 5, since the error generated in the N-arization of the target pixel is spread to the peripheral unprocessed pixel and the area tone in the peripheral zone can be maintained to approximately the same level as the original area tone, a print of high image quality that represents half tone with high fidelity can be securely provided.

Mode 31: A computer-readable storage medium according to mode 31 is a computer-readable storage medium storing the image processing program according to one of modes 25 to 30.

Thus, using a computer-readable storage medium such as CD-ROM, DVD-ROM, flexible disk or semiconductor chip, the image processing program according to one of the above-described modes 25 to 30 can be easily and securely provided to a person who demands the program.

Mode 32: An image processing method according to mode 32 includes: N-arizing (N≥2) image data, which is a set of M-ary pixel values (M>N) forming an image, for each pixel and thus generating N-ary image data; and generating print data in which a dot size corresponding to each of the pixel values of the N-ary image data generated by the generation of the N-ary data is set; wherein the generation of the print data includes, when a dot size of a predetermined range continues in the print data, generating print data in which the dot size corresponding to one of the pixels of the continuous dots is changed.

Since this prevents continuation of the dots of the size of the predetermined range, "white streaks" due to the banding phenomenon generated by so-called flight curving phenomenon can be effectively eliminated or made almost imperceptible. Also, since no print unit or the like is used, the method can be realized on software by using a general-purpose computer system such as personal computer.

Mode 33: An image processing method according to mode 33 includes: N-arizing (N≥2) image data, which is a set of M-ary pixel values (M>N) forming an image, for each pixel and thus generating N-ary image data; and generating print data in which a dot size corresponding to each of the pixel values of the N-ary image data generated by the generation of the N-ary data is set; wherein the generation of the print data includes, when a dot size smaller than a predetermined size continues in the print data, generating print data in which the dot size of the pixel corresponding to one of the continuous dots is changed to the predetermined size or larger.

Since this prevents continuation of the dots of the size of the predetermined range, "white streaks" due to the banding phenomenon generated by so-called flight curving phenomenon can be effectively eliminated or made almost imperceptible. Also, since no print unit or the like is used, the method can be realized on software by using a general-purpose computer system such as personal computer.

Mode 34: An image processing method according to mode 34 includes: N-arizing (N≥2) image data, which is a set of M-ary pixel values (M>N) forming an image, for each pixel and thus generating N-ary image data; and generating print data in which a dot size corresponding to each of the pixel values of the N-ary image data generated by the generation of the N-ary data is set; wherein the generation of the print data includes, when a dot size smaller than a predetermined size continues in the print data, changing the dot size corresponding to one of the pixels of the continuous dots to the predetermined size or larger, propagating an error of pixel value of the pixel generated by the dot size change to an unprocessed pixel, and resetting the dot size of the pixel to which the error is propagated by the error propagation.

This makes it possible to maintain area tone in the peripheral zone where the dot size conversion is done, to approximately the same level as the original area tone, and to provide a print of high quality with less density difference. Also, since no print unit or the like is used, the method can be realized on software by using a general-purpose computer system such as personal computer.

Mode 35: An image processing method according to mode 35 includes: N-arizing (N≥2) image data, which is a set of M-ary pixel values (M>N) forming an image, for each pixel and thus generating N-ary image data; and generating print data in which a dot size corresponding to the pixel value of the N-ary image data generated by the generation of the N-ary data is set; wherein the generation of the N-ary data includes adjusting the N-arization of the pixel value when dots are arranged next to each other with the dot size corresponding to the pixel value being equal to or less than a predetermined size, and propagating to an unprocessed pixel an error of pixel value generated when the N-arization is performed by the N-arization adjustment.

Thus, the area tone in the peripheral zone where dot size conversion is performed can be maintained to approximately the same level as the original area tone and a print of high quality with less density difference can be provided. Also, since the dot size is adjusted to the intended pixel value during the N-arization, the dot size change is not necessary when generating the print data, and the processing efficiency improves. Moreover, since no print unit or the like is used, the method can be realized on software by using a general-purpose computer system such as personal computer.

Mode 36: An image processing method according to mode 36 includes: N-arizing (N≥2) image data, which is a set of M-ary pixel values (M>N) forming an image, for each pixel and thus generating N-ary image data; and generating print data in which a dot size corresponding to the pixel value of the N-ary image data generated by the generation of the N-ary data is set; wherein the generation of the N-ary data includes adjusting the N-arization of the pixel value when the dots are arranged next to each other with the dot size corresponding to the pixel value being within a predetermined range, and propagating to an unprocessed pixel an error of pixel value generated when the N-arization is performed by the N-arization adjustment.

Thus, the area tone in the peripheral zone where dot size conversion is performed can be maintained to approximately the same level as the original area tone and a print of high quality with less density difference can be provided. Also, since the dot size is adjusted to the intended pixel value during the N-arization, the dot size change is not necessary when generating the print data, and the processing efficiency improves. Moreover, since no print unit or the like is used, the method can be realized on software by using a general-purpose computer system such as personal computer.

Mode 37: As an image processing method according to mode 37, in the image processing method according to mode 35 or 36, the generation of the N-ary data includes, when a target pixel of the image data is N-arized, spreading the error of pixel value to an unprocessed pixel around the target pixel.

Thus, the error generated by the N-arization is allotted to the peripheral pixels in accordance with a predetermined error spreading matrix and its influence is considered in the subsequent processing, thus minimizing the overall error. Therefore, a print of high image quality that represents half tone with high fidelity can be securely provided.

### BRIEF DESCRIPTION OF THE DRAWINGS

The invention will be described with reference to the accompanying drawings, by way of example only, wherein like numbers refer to like elements.

Fig. 1 is a functional block diagram showing a first embodiment of a printing device according to the invention.

Fig. 2 is a block diagram showing a hardware construction of a computer system that realizes the printing device according to the invention.

Fig. 3 is a partially enlarged bottom view showing the structure of a print head according to the invention.

Fig. 4 is a partially enlarged side view showing the structure of the print head according to the invention.

Fig. 5 is a conceptional view showing an example of ideal dot pattern in which no flight curving phenomenon occurs.

Fig. 6 is a conceptional view showing an exemplary dot pattern formed by the flight curving phenomenon of one nozzle.

Fig. 7 shows a conversion table showing the relation between pixel value and N-value and between the N-value and dot size, referred to in N-arization.

Fig. 8 is a flowchart showing an exemplary flow of target pixel decision processing.

Fig. 9 is a flowchart showing an exemplary flow of dot conversion processing.

Figs. 10A to 10F show an exemplary flow of dot conversion processing according to the first embodiment.

Figs. 11A to 11F show an exemplary flow of dot conversion processing according to the first embodiment.

Fig. 12 shows an example of dot patterns before and after the processing in the first embodiment.

Figs. 13A to 13C are explanatory views showing the difference in the print mode between a multipath ink jet printer and a line-head ink jet printer.

Fig. 14 is a conceptional view showing another exemplary structure of a print head.

Fig. 15 is a conceptional view showing an exemplary computer-readable storage medium storing a program according to the invention.

Fig. 16 is a functional block diagram showing a second embodiment of the printing device according to the invention.

Fig. 17 is a flowchart showing an exemplary flow of processing according to the second embodiment.

Fig. 18 shows a first example of N-arization conversion table using converted threshold values.

Fig. 19 shows a second example of N-arization conversion table using converted threshold values.

Figs. 20A to 20F show an exemplary flow of N-arization and dot conversion processing according to the second embodiment.

Figs. 21A to 21D show an exemplary flow of N-arization and dot conversion processing according to the second embodiment.

### DESCRIPTION OF EXEMPLARY EMBODIMENTS

Hereinafter, the best modes for carrying out the invention will be described in detail with reference to the attached drawings.

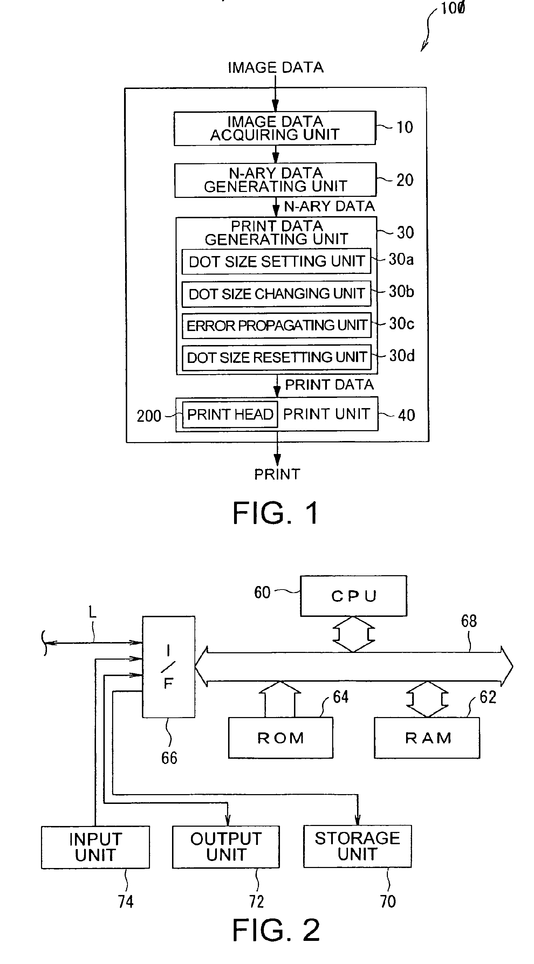

Figs. 1 to 15 show a first embodiment related to a printing device 100, a print program, a printing method, an image processing device, an image processing program, an image processing method and a computer-readable storage medium according to the invention.

Fig. 1 is a functional block diagram showing the first embodiment of the printing device 100 according to the invention.

As shown in Fig. 1, this printing device 100 is mainly formed by: a print head 200 having plural nozzles; an image data acquiring unit 10 that acquires image data (hereinafter properly referred to as "multi-valued image data"), which is a set of M-ary pixel values (M>N) forming an image to be printed; an N-ary data generating unit 20 that N-arizes (N≥2) the multi-valued image data acquired by the image data acquiring unit 10, along the direction of arrangement of the nozzles of the print head 200, and thus generates N-ary image data; a print data generating unit 30 that generates print data in which a dot size corresponding to each of the pixel values of the N-ary image data generated by the N-ary data generating unit 20 is set; and an ink-jet print unit 40 that executes print based on the print data generated by the print data generating unit 30, by using the print head 200.

First, the print head 200 applied to the invention will be described.

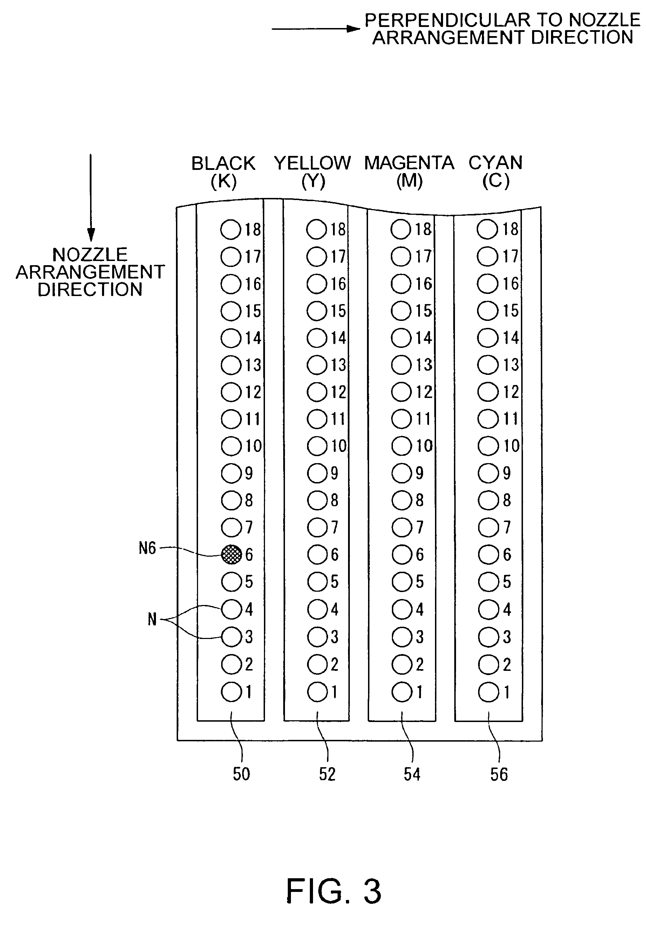

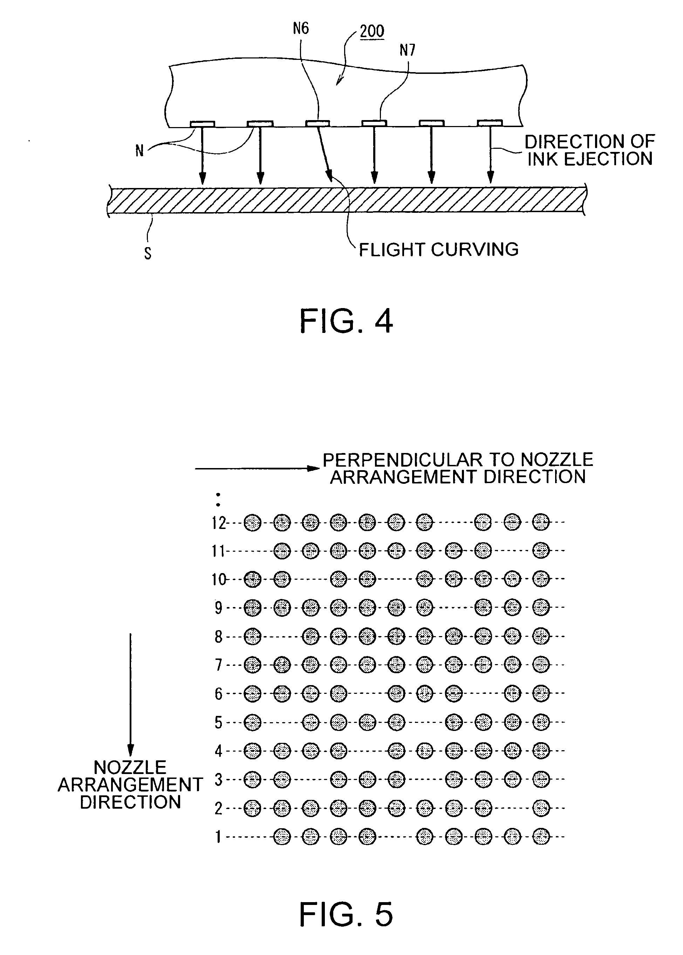

Fig. 3 is a partially enlarged bottom view showing the structure of this print head 200. Fig. 4 is a partially enlarged side view thereof.

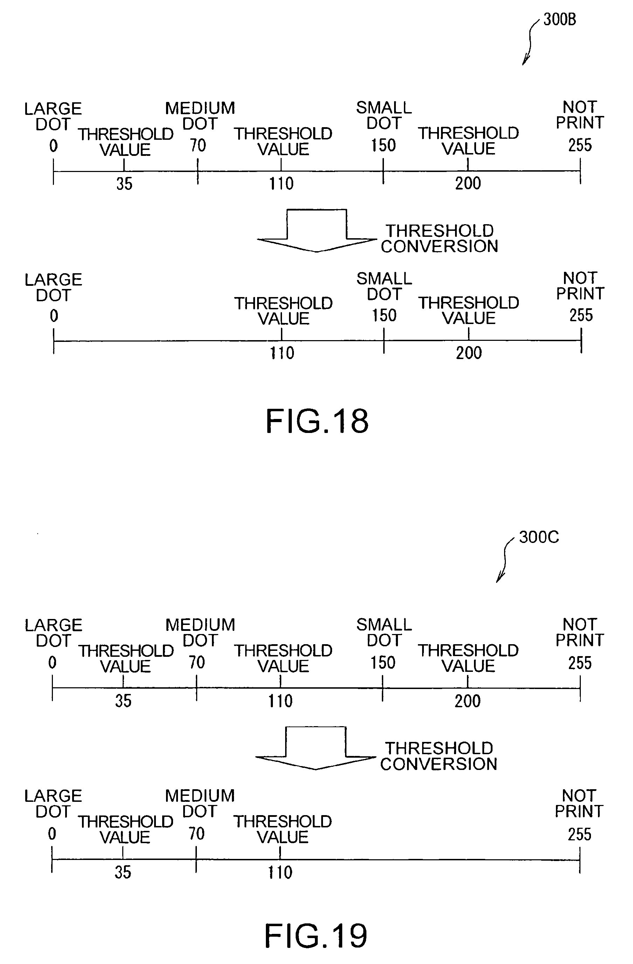

As shown in Fig. 3, the print head 200 has an elongate structure extending in the direction of the width of a print sheet used in a so-called line-head printer. The print head 200 is formed by integrally arranging four nozzle modules 50, 52, 54 and 56 in a direction perpendicular to the direction of arrangement of the nozzles, that is, a black nozzle module 50 in which plural nozzles N (in Fig. 3, 18 nozzles) exclusively for ejecting black (K) ink are arranged linearly, a yellow nozzle module 52 in which plural nozzles N exclusively for ejecting yellow (Y) ink are arranged linearly in the same direction as in the black nozzle module 50, a magenta nozzle module 54 in which plural nozzles N exclusively for ejecting magenta (M) ink are arranged linearly in the same direction as in the black nozzle module 50, and a cyan nozzle module 56 in which plural nozzles N exclusively for ejecting cyan (C) ink are arranged linearly in the same direction as in the black nozzle module 50. In the case of a print head for monochromic print, only black (K) is used. In the case of a print head for an image of high quality, ink of six or seven colors including light magenta and light cyan may be used.

Fig. 4 shows, for example, the black nozzle module 50, which is one of these four nozzle groups 50, 52, 54 and 56, from its lateral side. Fig. 4 shows a state where a flight curving phenomenon occurs in the sixth nozzle N6 from left and thus the ink is obliquely ejected from the nozzle N6, forming a dot near the landing position of the ink ejected from the neighboring normal nozzle N7.

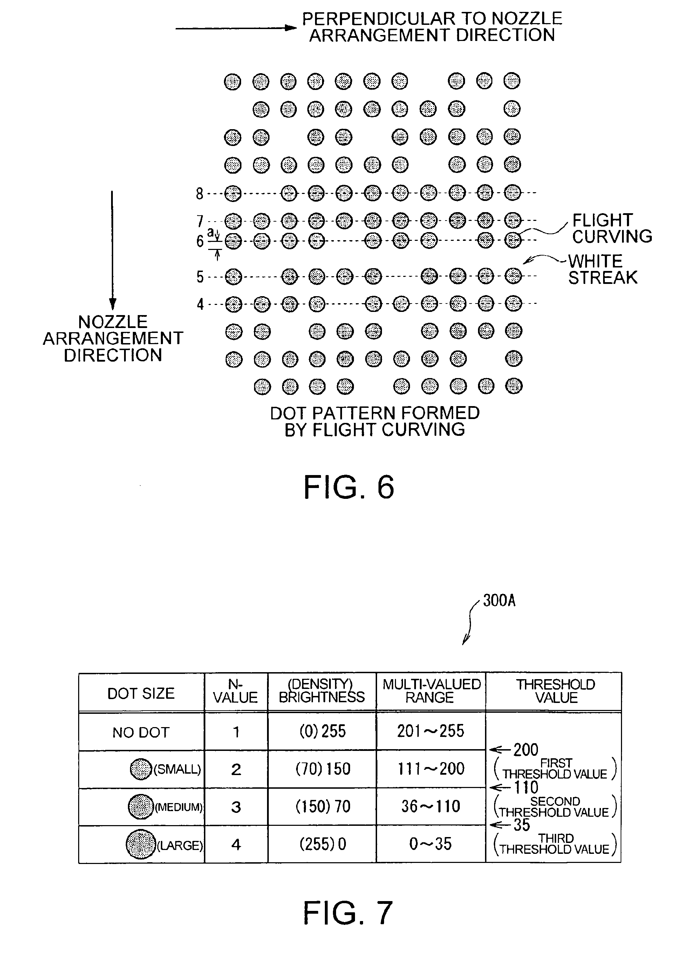

Therefore, when print is executed using this black nozzle module 50, if flight curving does not occur, each dot is printed at its prescribed landing position (forming an ideal dot pattern) as shown in Fig. 5, whereas if a flight curving phenomenon occurs, for example, in the sixth nozzle N6 from left, the landing position of the dot ink is deviated from the target landing position by a distance "a" toward the landing position of the dot ink ejected from the neighboring normal nozzle N7, as shown in Fig. 6. It is considered that the characteristics of this print head 200 are fixed to a certain extent on the manufacturing stage and are rarely changed after the manufacturing, except for the case of ejection failure due to ink clogging or the like.

Next, the image data acquiring unit 10 provides a function of acquiring multi-valued color image data to be printed, sent from a print instruction device (not shown) such as a personal computer (PC) or printer server connected with this printing device 100 via a network or the like, or directly reading the image data from an image (data) reading device such as a scanner or CD-ROM drive, not shown, and thus acquiring the image data. Moreover, if the acquired multi-valued color image data is multi-valued RGB data, for example, image data in which the tone (brightness value) of each color (R, G or B) per pixel is expressed by eight bits (0 to 255), the image data acquiring unit 10 also provides a function of performing color conversion processing on this image data and thus converting the image data to multi-valued CMKY (in the case of four colors) corresponding to each ink of the print head 200.

The N-ary data generating unit 20 provides a function of N-arizing (N≥2) the multi-valued image data acquired by the image data acquiring unit 10 along the nozzle arrangement direction in the print head 200 and thus generating N-ary image data.

Fig. 7 shows an example of N-arization and dot size conversion table 300A showing the relation between the pixel value and the N-ary value and the relation between the N-ary value and the dot size, referred to in the N-arization carried out by the N-ary data generating unit 20.

In the example of Fig. 7, if a quaternary value of N=4 is used, "brightness value" is selected as the pixel value and the pixel value related to the brightness of the acquired multi-valued image data is expressed by eight bits of 256 (0 to 255) tone levels, pixel values are allocated into four types of N-values in accordance with three threshold values "35", "110" and "200".

That is, if the brightness value is within a range of "255" to "201", it is converted to an N-value "1". If the brightness value is within a range of first threshold value "200" to "111", it is converted to an N-value "2". If the brightness value is within a range of second threshold value "110" to "36", it is converted to an N-value "3". If the brightness value is within a range of third threshold value "35" to "0", it is converted to an N-value "4".

When "density value" is employed as this pixel value, it is converted to an N-value in the relation the opposite to the case of "brightness value".

Next, the print data generating unit 30, which is for generating print data from the N-ary image data generated by the N-ary data generating unit 20, includes a dot size setting unit 30a, a dot size changing unit 30b, an error propagating unit 30c, and a dot size resetting unit 30d, as shown in Fig. 1.

The dot size setting unit 30a provides a function of setting a dot corresponding to the N-value for each pixel generated by the N-ary data generating unit 20. For example, it sets a dot corresponding to the N-value for each pixel in accordance with the N-arization and dot size conversion table 300A shown in Fig. 7.

That is, in the example of Fig. 7, if the N-value is "1", "no dot" is selected as the dot size. If the N-value is "2", "small dot" having the smallest area is selected. If the N-value is "3", "medium dot" having the next large area is selected. If the N-value is "4", "large dot" having the largest area is selected. Thus, each dot is set as a dot corresponding to each pixel.

The dot size changing unit 30b provides a function of, when dots smaller than a predetermined size continue in the direction of nozzles arrangement in the print head 200, changing the dot size of one of the pixels to the predetermined size or larger.

For example, when there are four types of dot sizes ("small dot", "medium dot", "large dot") including "no dot" and two or more dots smaller than "medium dot" continue, that is, in four patterns of "medium dot" and "medium dot", "medium dot" and "small dot", "small dot" and "small dot", and "small dot" and "medium dot", the dot size on the later stage in the direction of nozzle arrangement in the print head 200 is forcedly changed from "medium dot" or "small dot" to "large dot".

On the other hand, when there are many dot sizes, for example, 16 types, including "no dot", and "no dot" is expressed by "1", "smallest dot" is expressed by "2", "next large dot" is expressed by "3", ..., "largest dot" is expressed by "16", the plural dot sizes may be grouped and collectively handled by predetermined range such as "1" to "5", "6" to "10", and over "10".

The error propagating unit 30c, a specific example of which will be described in detail later, provides a function of propagating an error of pixel value of the target pixel generated in the dot size change by the dot size changing unit 30b to a neighboring unprocessed pixel.

For example, if the dot of a target pixel before the dot size change is a "medium dot" and the size of this dot is forcedly increased to "large dot", the N-value of the target pixel becomes "4" and its brightness value becomes "0" as shown in Fig. 7. As a result, an error of a brightness value "70" is generated. Therefore, this error of "70" is propagated to the pixel in the next line. That is, if the direction of nozzle arrangement in the print head 200 is an up-and-down direction, the error is propagated to the next unprocessed pixel on the right side or left side.

The dot size resetting unit 30d provides a function of resetting the dot size of the pixel to which the error is propagated by the error propagating unit 30c.

For example, when the dot of the target pixel to which the error is propagated by the error propagating unit 30c is a "medium dot" (with a pixel value "70") as described above and the error of brightness value "70" is propagated by the error propagating unit 30c, the pixel value is "70"+"70" = "140" and the dot size is reset to "small dot" corresponding to this pixel value. In short, the dot size is changed from "medium dot" to "small dot".

Here, the technique itself of discriminating the dot size on a print as described above is a conventionally known technique, which is frequently used for acquiring a print on which particularly high print speed and print image quality are realized.

That is, while high image quality is achieved by reducing the dot size, performance of high mechanical accuracy is required when the dot size is reduced. Also, many dots must be printed in order to form a solid image with small dots. Thus, by utilizing the technique of discriminating the dot size, like reducing the dot size in an extremely detailed image part and increasing the dot size in a solid image part, high print speed and image quality are realized.

The technique for realizing discrimination of the dot size in this manner can be easily realized by, for example, when a piezo actuator is used for the print head, controlling changing the voltage applied to the piezo actuator and thus controlling the quantity of ink ejection.

Next, the print unit 40 is an ink-jet printer that ejects ink from each of the nozzle modules 50, 52, 54 and 56 formed in the print head 200 while moving one or both of a print medium (sheet) S or the print head 200, and thus forms a predetermined image consisting of many dots on the print medium S. The print unit 40 is formed by known constituent elements such as a print head carrier mechanism (in the case of serial type), not shown, for moving the print head 200 back and forth on the print medium S in the direction of the width of the print medium S, a paper feeder mechanism, not shown, for moving the print medium S, and a print controller mechanism, not shown, for controlling the ink ejection from the print head 200 on the basis of the print data, in addition to the above-described print head 200.

Here, this printing device 100 has a computer system for realizing various controls for printing, the image data acquiring unit 10, the N-ary data generating unit 20, the print data generating unit 30, the print unit 40 and the like on software. Its hardware configuration includes a central processing unit (CPU) 60 that performs various controls and arithmetic processing, a random access memory (RAM) 62 forming a main storage, and a read-only memory (ROM) 64 as a read-only storage, interconnected by a various inner/outer bus 68 such as peripheral component interconnect (PCI) bus and industrial standard architecture (ISA) bus, as shown in Fig. 2. Also, an external storage (secondary storage) 70 such as hard disk drive (HDD), an output unit 72 such as the print unit 22, CRT or LCD monitor, an input unit 74 such operating panel, mouse, keyboard or scanner, and a network L for communicating with a print instruction device, not shown, are connected to the bus 68 via an input/output interface (I/F) 66.

When the power is turned on, a system program such as BIOS stored in the ROM 64 or the like loads to the RAM 62 various dedicated computer programs stored in advance in the ROM 64 or various dedicated computer programs installed into the storage unit 70 via a storage medium such as CD-ROM, DVD-ROM or flexible disk (FD) or via the communication network L such as the Internet. In accordance with commands described in the programs loaded in the RAM 62, the CPU 60 performed predetermined controls and arithmetic processing, using various resources. Thus, each function of each unit as described above can be realized on software.

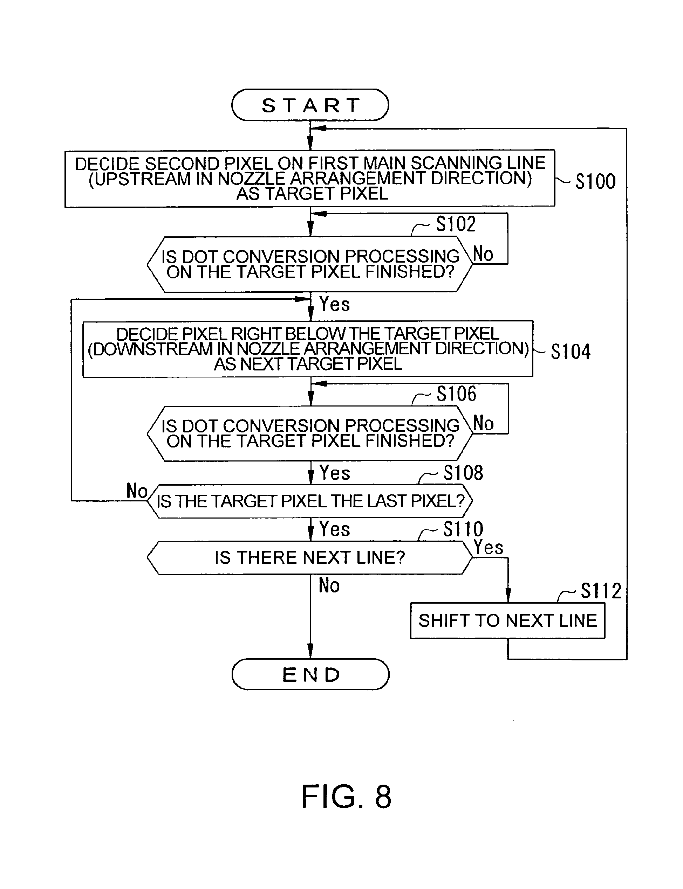

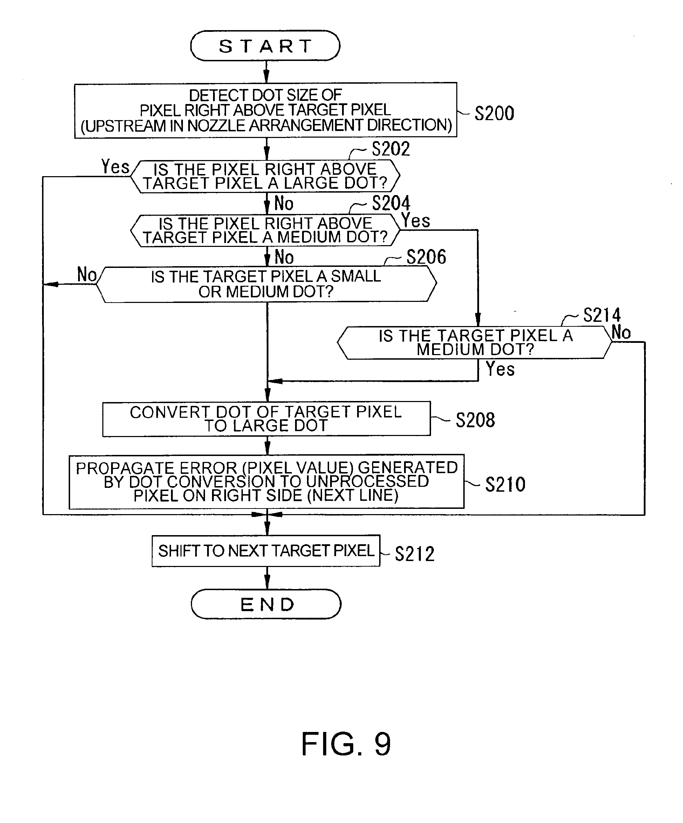

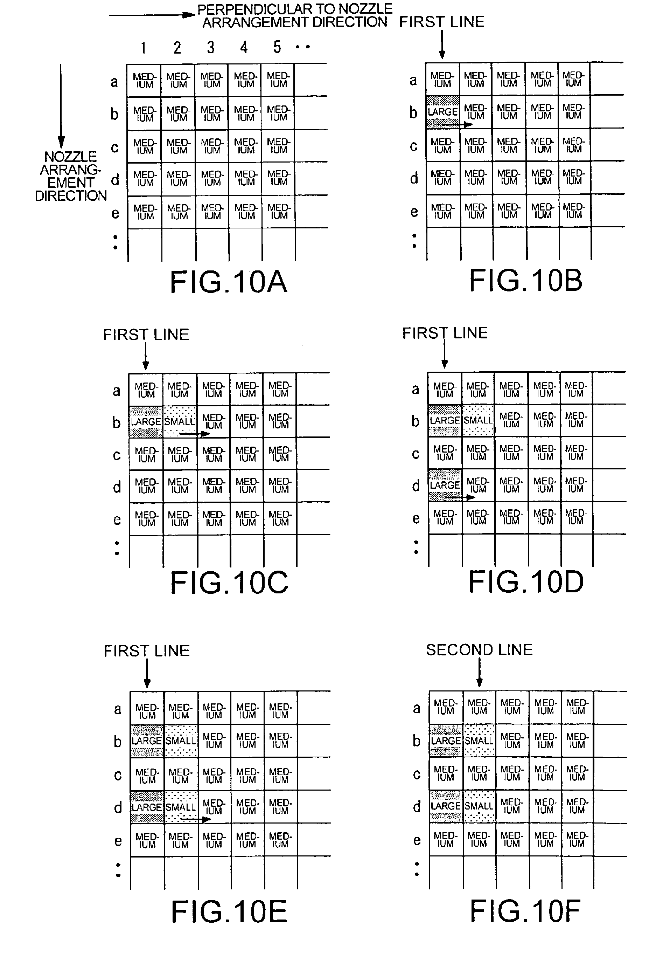

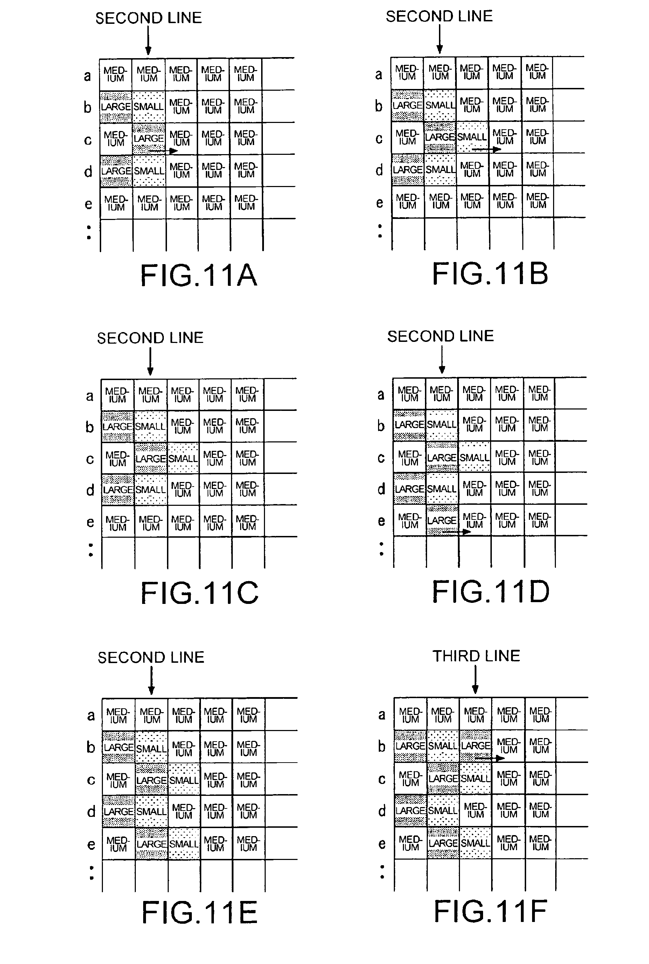

Next, an exemplary flow of print processing using the printing device 100 of the above-described construction will be described with reference mainly to the flowcharts of Figs. 8 and 9 and the diagrams of Figs. 10 and 11 showing a flow of dot size change processing.

As described above, generally, the print head 200 for printing dots can simultaneously print dots of plural types of colors such as four colors or six colors. However, in the following example, any dot is printed by the single-color print head 200 (monochromic image), for simplifying the explanation.

First, in this printing device 100, when a predetermined initial operation for print processing is finished after the power is turned on, if a print instruction terminal such as personal computer, not shown, is connected thereto, the image data acquiring unit 10 monitors whether an explicit print instruction is given from the print instruction terminal. When it is judged that the print instruction and multi-valued image data as a processing subject are sent, target pixels to be processing subjects are sequentially decided in accordance with a target pixel decision flow shown in Fig. 8 and dot conversion processing as shown in Fig. 9 is executed for each of the target pixels.

In this case, when the image data acquired by the image data acquiring unit 10 is multi-valued RGB data, the image data is converted to multi-valued CMYK data corresponding to the ink to be used, on the basis of a predetermined conversion algorithm, as described above, and then the multi-valued CMYK data is handled as image data of a processing subject.

The flowchart of Fig. 8 shows an exemplary flow of decision of target pixels to be processing subjects. Fig. 9 shows an exemplary flow of dot conversion processing on the target pixels decided by the decision flow.

In the flow of the processing to decide each target pixel constituting multi-valued image data to be a processing subject, as shown in Fig. 8, first at step S100, the second pixel excluding the top pixel on the line in the nozzle arrangement direction is decided as the first target pixel. After that, the procedure shifts to the next step S102 and it is judged whether dot conversion processing on the target pixel is finished or not. If it is judged that the processing is not finished (No), the procedure waits until the processing on the target pixel is finished. When it is judged that the processing is finished (Yes), the processing shifts to the next step S104 and the pixel right below the target pixel (downstream in the nozzle arrangement direction) is decided as the next target pixel.

For example, as shown in Fig. 10(1), in the case where an upper left pixel 1a is considered to be the starting point of the processing on image data in which many pixels are arrayed vertically and horizontally and a pixel 1b right below the pixel 1a is decided as the first target pixel, when the processing on the first target pixel 1b is finished, a pixel 1c right below the pixel 1b is then decided as the next target pixel. The decision of the target pixel sequentially shifts to the pixel (1d, 1e, ...) right below each target pixel and these pixels are decided as target pixels one after another.

The procedure then shifts to the next step S106. When it is judged that the processing on the target pixel is finished (Yes), the procedure shifts further to the next step S108 and it is judged whether the target pixel is the last (bottom) pixel on the line or not. If it is judged that the pixel is not the last pixel (No), the procedure returns to step S104 and the decision of the next pixel as a target pixel is sequentially repeated. When it is judged that the pixel is the last (bottom) pixel on the line (Yes), the procedure shifts to step S110.

At step S110, it is judged whether there is a line next to that line or not. If it is judged that there is no line (No), the processing ends here. If it is judged that there is a next line (Yes), the procedure shifts to step S112 and hence to the next line. After that, the procedure returns to the first step S100 and similar processing is performed on the pixels on the line, thus sequentially deciding target pixels. This processing is repeated until the last pixel on the last line is reached.

In the example of Fig. 10(1), when the processing on all the pixels on the first line "1" is finished, the processing shifts to the next line "2". After the second pixel 2b on the line "2" is decided as the first target pixel on the line, the pixels on the line "2" are sequentially decided in order of pixels 2c, 2d, 2e and so on. After the processing on all the pixels on the line "2" is finished, target pixels are decided on the next lines "3", "4" and so on. When the last pixel nn on the last line "n" is decided, the target pixel decision processing ends.

Next, an exemplary flow of dot conversion processing on the target pixel decided in accordance with such a target pixel decision flow will be described with reference mainly to the flowchart of Fig. 9 and the diagrams of Fig. 10 and 11.

First, when performing the dot conversion processing as shown in Fig. 9, a provisional dot size is set in advance for each pixel by the dot size setting unit 30a of the print data generating unit 30.

That is, as shown in Fig. 1, after multi-valued image data to be a processing subject is acquired by the image data acquiring unit 10, the multi-valued image data is N-arized to produce N-ary data by the N-ary data generating unit 20 and provision print data in which a provision dot size is set for each pixel is generated on the basis of the N-ary data by the dot size setting unit 30a of the print data generating unit 30. It is a matter of course that a known half tone forming technique such as error spreading processing or dither technique can be properly used in parallel in the N-arization of the multi-valued image data by the N-ary data generating unit 20.

When the first target pixel is decided as shown in the flowchart of Fig. 8 with respect to the print data in which a provisional dot size is thus set for each pixel, the dot conversion processing of Fig. 9 is performed on the target pixel.

That is, as shown in the first step S200 of Fig. 9, as the target pixel to be a processing subject is decided, a pixel right above the target pixel is looked at and the dot size of the pixel right above the target pixel is detected. The, the procedure shifts to the next step S202.

At step S202, it is judged whether the pixel right above the target pixel is a "large dot" or not. If it is judged that the pixel is a "large dot" (Yes), the procedure jumps to step S212. If it is judged that the pixel is not a "large dot" (No), the procedure shifts to the next step S204.

In this embodiment, the N-value is "4" and the dot types to be used are four types corresponding to the N-value, namely, "no dot", "small dot", "medium dot" and "large dot".

At step S204, it is judged whether the pixel right above the target pixel, which has been judged not to be a "large dot", is a "medium dot" or not. If it is judged that the pixel is a "medium dot" (Yes), the procedure shifts to step S214. If it is judged that the pixel is not a "medium dot" (No), the procedure shifts to the next step S206 and it is judged whether the target pixel is a "small or medium dot" or not. If it is judged that the target pixel is not a "small or medium dot" (No), the procedure shifts to step S212. If it is judged that the target pixel is a "small or medium dot" (Yes), the procedure shifts to the next step S208 and the dot size of the target pixel is converted from "small or medium dot" to "large dot". After that, the procedure shifts to the next step S210.

At step S210, an error (pixel value) generated by the dot size conversion processing at the foregoing step S208 is propagated to an unprocessed pixel (right pixel) on the next line that is next to the target pixel.

As the error is thus propagated to the unprocessed pixel on the next line, the procedure shifts to the last step S212. The procedure then shifts to the next target pixel and similar processing is repeated.

Meanwhile, if it is judged at the above step S204 that the pixel right above the target pixel is a "medium dot" (Yes) and the procedure shifts to step S214, it is further judged at step S214 whether the target pixel is a "medium dot" or not. If it is judged that the target pixel is not a "medium dot" (No), the procedure jumps to step S212. If it is judged that the target pixel is a "medium dot" (Yes), the procedure shifts to step S208 and the dot of the target pixel is converted to "large dot".

An exemplary flow of such dot conversion processing will be specifically described with reference to the diagrams of Figs. 10A to 10F and Figs. 11A to 11F.

Fig. 10A shows an example of print data in which many pixels are arrayed in the nozzle arrangement direction and in the direction perpendicular thereto and in which a provision dot for each pixel ("medium dot" for each pixel) is set.

In the case of such provisional print data, first, when the second pixel 1b from top on the first line is decided as the first target pixel, as shown in Fig. 10A, the dot size of the pixel 1a right above the target pixel 1b is detected (step S200).

In the example shown, since the dot size of the pixel 1a right above the target pixel is "medium dot", the procedure goes through steps S202 and S204 and shifts to step 214. Then, it is judged whether the target pixel 1b is a "medium dot" or not.

In the example shown, since the target pixel 1b is a "medium dot", the procedure shifts to step S208 and dot size conversion of the target pixel 1b from "medium dot" to "large dot" is performed, as shown in Fig. 10B.

As such dot size conversion is done, an error corresponding to the dot size occurs with respect to the original pixel value. Therefore, the error is propagated to an unprocessed pixel on the next line, as shown in Fig. 10B.

In the example shown, since the dot size is converted from "medium dot" to "large dot", an error "70" occurs as shown in Fig. 7. Therefore, this error "70" is directly propagated to the neighboring unprocessed pixel 2b on the second line.

Thus, this unprocessed pixel 2b has a pixel value "140" since the error "70" is added to its original pixel value "70". Its dot size is converted from "medium dot" to "small dot", as shown in Fig. 10C.

Since the pixel value of "small dot" is "150" as shown in Fig. 4, an error "-10" is generated by this dot conversion. However, this error, too, is similarly propagated to the neighboring unprocessed pixel 3b on the third line, which is the next line to the second line.

Next, as the dot conversion processing on the first target pixel 1b is thus finished, the target pixel is shifted to the next pixel 1c and similar processing is performed thereon.

In the example of Fig. 10C, since the pixel 1b right above the target pixel 1c is a "large dot", the dot size of the target pixel 1c is maintained and the target pixel is shifted to the next pixel 1d.

Since the next target pixel 1d has a dot size of "medium dot" and the pixel 1c right above the pixel 1d is a "medium dot", too, the dot size is converted to "large dot" as shown in Fig. 10D and the error "70" is propagated to the neighboring unprocessed pixel 2d on the second line as described above.

As a result, the dot size of the neighboring unprocessed pixel 2d on the second line is converted to "small dot" as shown in Fig. 10E and the error "-10" is propagated to the neighboring unprocessed pixel 3d on the third line, which is the next line.

When the target pixel is sequentially shifted downward in this manner and similar dot conversion processing is finished on the pixel situated at the bottom end, the target pixel is shifted to the second line, which is the next line, as shown in Fig. 10F and the second pixel 2b on the line is decided as the first target pixel on the line.

As for this first target pixel 2b, since the pixel size of the pixel 2a right above the target pixel 2b is "medium dot" as shown in Fig. 10F, the procedure goes through steps S202 and S204 to reach step S214 shown in Fig. 9. Since the dot size is "small dot", that is, it is not "medium dot", the dot conversion processing is not performed and the target pixel is shifted to the next pixel 2c (step S212).

Since the next target pixel 2c is a "medium dot" and the pixel 2b right above the target pixel 2c is a "small dot" as shown in Fig. 10F, the procedure goes through steps S202, S204 and S206 to reach step S208. The size of the target pixel 2c is converted from "medium dot" to "large dot" and the error is propagated to the neighboring unprocessed pixel 3c on the third line, which is the next line, as shown in Fig. 11A. Since this neighboring unprocessed pixel 3c is a "medium dot" as shown in Fig. 11B, its dot size is similarly converted to "small dot" by receiving the error "70" from the target pixel 2c, and the error "-10" is propagated to the neighboring unprocessed pixel 4c on the fourth line, which is the next line.

When the dot conversion processing on this target pixel 2c is finished, the target pixel is shifted to the pixel 2d right below the pixel 2c and similar dot conversion processing is performed on the target pixel 2d, as shown in Fig. 11C. As for this target pixel 2d, since the pixel 2c right above the pixel 2d is a "large dot", conversion processing is not performed and the target pixel is shifted to the next pixel 2e.

Since the next target pixel 2e has a dot size of "medium dot" and the dot size of the pixel 2d right above the pixel 2e is "small dot" as shown in Fig. 11C, the dot size is converted to "large dot" as in the case of the processed pixel 2c and the error is propagated to the neighboring unprocessed pixel 3e on the third line. As a result, the dot size of the neighboring unprocessed pixel 3e is converted from "medium dot" to "small dot" as shown in Figs. 11D and 11E.

When the dot conversion processing on the pixel at the bottom end of the second line is thus finished, similar processing is repeated on the third line as shown in Fig. 11F and the processing ends when the bottom pixel on the last line is reached.

The error generated by the dot conversion processing on the last line is discarded since there is no pixel to which the error can be propagated.

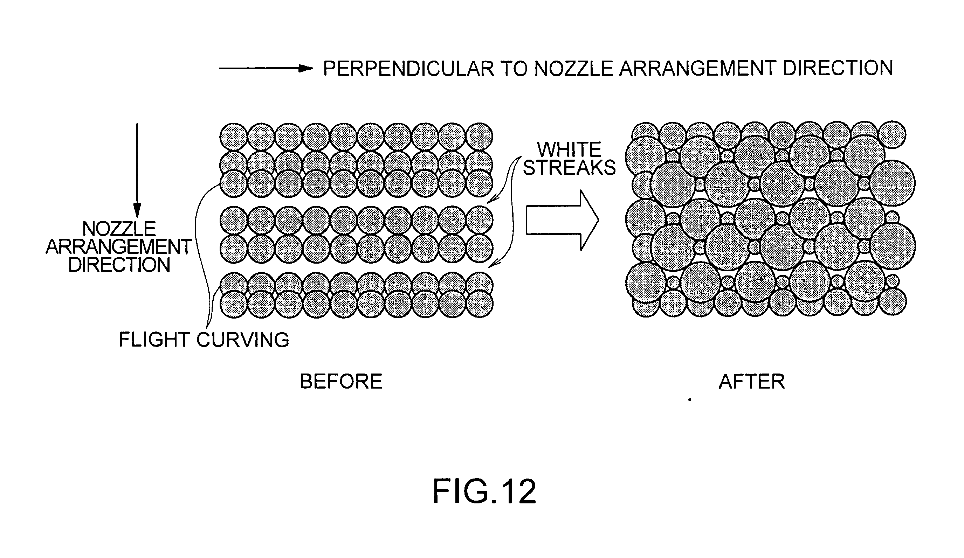

Fig. 12 shows a change of dot pattern before and after such dot conversion processing is performed. The dot pattern on the left side in Fig. 12 is the dot pattern before the dot conversion processing is performed. The dot pattern on the right side in Fig. 12 is the dot pattern after the dot conversion processing is performed.

As shown in Fig. 12, in the dot pattern before the dot conversion processing is performed, it can be seen that two white streaks appear clearly in parallel in the direction perpendicular to the nozzle arrangement direction because of the flight curving phenomenon in the two parts. However, in the dot pattern after the dot conversion processing is performed, it can be seen that the two white streaks generated between "medium dots" have been eliminated almost perfectly because "small or medium dots" are prevented from continuing in the nozzle arrangement direction.

Also, it can be seen that since the dot next to a "large dot" is a "small dot" or "medium dot" and "large dots" do not continue vertically or horizontally, the overall tone of the image is not significantly changed and substantially the same tone as the original tone is maintained.

In this manner, according to the invention, when dots smaller than a predetermined size continue in the nozzle arrangement direction in the print head, the dot size of one of the pixels is changed to the predetermined size or larger. Therefore, continuation of dots smaller than the predetermined size in the nozzle arrangement direction is prevented and the banding phenomenon generated by the so-called flight curving phenomenon can be effectively eliminated or made almost imperceptible.

In the above, the dot sizes discriminated in the invention and by the ordinary print head 200 are the four types of "large dot", "medium dot", "small dot" and "no dot", as shown in Fig. 7. However, the dot size types are not limited to these. It suffices that at least two types are provided other than "no dot", and a larger number of types is more preferable.

The print head 200 in this embodiment corresponds to the print head in the printing device according to mode 1 or the like in the description of the means for solving the problem, and the N-ary data generating unit 20, the print data generating unit 30 and the print unit 40 correspond to the N-ary data generating unit, the print data generating unit and the print unit in the printing device according to mode 1 or the like, respectively.

As a feature of the invention, image data is converted to print data in accordance with the print head characteristics, almost without modifying the exiting print head 200 and print unit 40. Therefore, it is not necessary to prepare particularly dedicated print head 200 or print unit 40, and the conventional ink-jet print head 200 and print unit 40 (printer) can be utilized without any modification.

Thus, if the print head 200 and the print unit 40 are separated from the printing device 100 according to the invention, their functions can be realized simply by a general-purpose information processing device (image processing device) such as personal computer.

Also, it is a matter of course that the printing device 100 according to the invention is not limited to the form in which all of its functions are accommodated in a single casing. The printing device 100 may also have a function-distributed construction in which a part of its functions, for example, only the N-ary data generating unit 20 is realized on the personal computer, while the print data generating unit 30 and the print unit 40 are realized on the printer.

It is also a matter of course that the invention can be applied not only to the flight curving phenomenon but also totally similarly to the case where the direction of ink ejection is vertical (normal) but the nozzle forming position is deviated from its regular position and therefore the same result as the flight curving phenomenon occurs in the formed dot.

Moreover, the invention can be similarly applied to such a failure that ink is not ejected from a specific nozzle.

Also, the printing device 100 according to the invention can be applied not only to a line-head ink jet printer but also to a multipath ink jet printer (serial printer). In the case of a line-head ink jet printer, even when the flight curving phenomenon occurs, it is possible to provide by one path a print of high quality on which white streaks or dark streaks are almost imperceptible. In the case of a serial printer, since the number of reciprocations can be reduced, printing at a higher speed than in the conventional technique is possible. For example, if desired image quality can be realized in one print, when compared with the case of reciprocating printing K times, the print time can be reduced to 1/K.

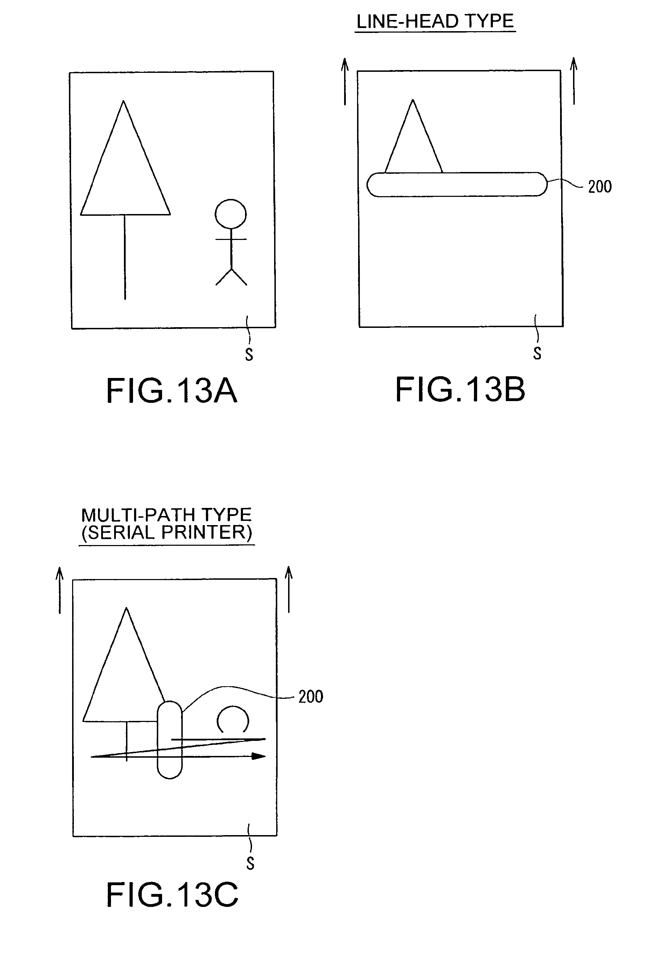

Figs. 13A to 13C show the printing modes of the line-head ink jet printer and the serial printer.

For image data as shown in Fig. 13A, in the line-head ink jet printer, the print head 200 has a length equivalent to the width of the print sheet S and this print head 200 is fixed while the print sheet S is moved on the print head 200 into the direction perpendicular to the nozzle arrangement direction, thereby completing printing in so-called single scan (one path), as shown in Fig. 13B. It is also possible to fix the print sheet S and move the print head 200 in the direction perpendicular to the nozzle arrangement direction or move the print sheet S and the print head 200 in the opposite directions for printing, as in a so-called flat-bed scanner.

On the other hand, in the serial printer, the print head 200 shorter than the length equivalent to the width of the sheet is situated in the direction perpendicular to the nozzle arrangement direction in the line-head type print head 200, and while this print head 200 is reciprocated many times in the nozzle arrangement direction in the print head 200, the print sheet S is moved by predetermined pitch each into the direction perpendicular to the nozzle arrangement direction in the line-head type print head 200, thus executing printing, as shown in Fig. 13C. Therefore, in the case of the serial printer, though it has a drawback that the print time is longer than in the line-head ink jet printer, it is possible to repeatedly situate the print head 200 at an arbitrary position and hence to cope with, to a certain extent, particularly the white streaks of the banding phenomenon as described above.

Also, while the ink jet printer that ejects ink in dots to perform printing is described as an example in this embodiment, the invention can also be applied to other printing devices using a print head in which printing mechanisms are arrayed in line, for example, a thermal head printer, which is referred to as heat transfer printer or thermal printer.

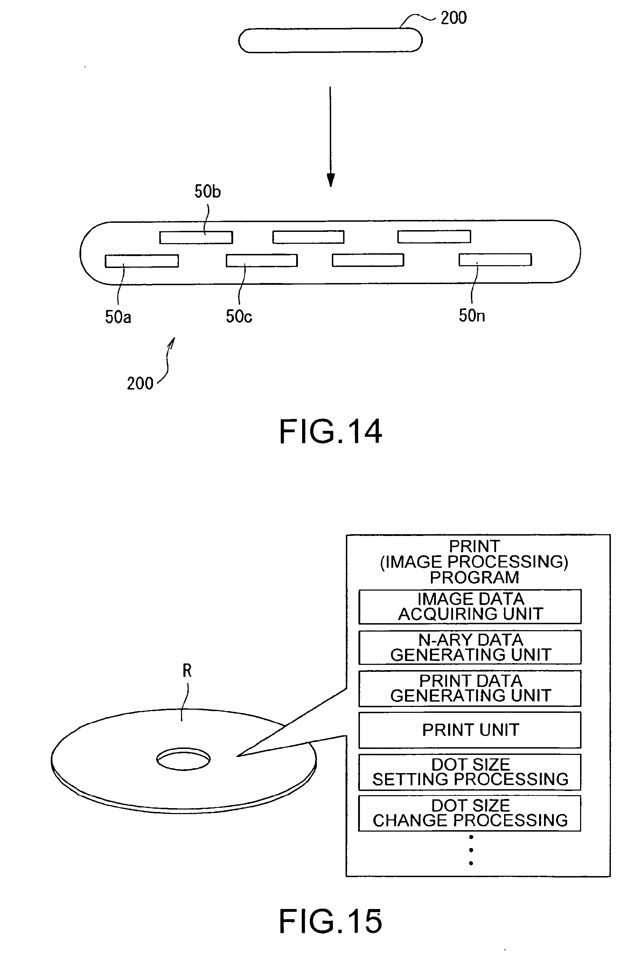

In Fig. 3, the nozzle modules 50, 52, 54 and 56 provided for each color in the print head 200 have the nozzles N linearly continuing in the longitudinal direction of the print head 200. However, as shown in Fig. 14, these nozzle modules 50, 52, 54 and 56 may be formed by plural short nozzle units 50a, 50b, ..., 50n and these units may be arranged ahead and behind the moving direction of the print head 200. Particularly, when the nozzle modules 50, 52, 54 and 56 are formed by the plural short nozzle units 50a, 50b, ..., 50n, the yield significantly improves, compared with the case where the long nozzle units are used.

Each unit for realizing the printing device 100 according to this embodiment can be realized on software using a computer system incorporated in most of the existing printing devices. Its computer program can be incorporated in a product as it is stored in a semiconductor ROM in advance, distributed through a network such as the Internet, or stored in a computer-readable storage medium R such as CD-ROM, DVD-ROM or FD as shown in Fig. 15, and thus can be easily provided to a user who wants the program.

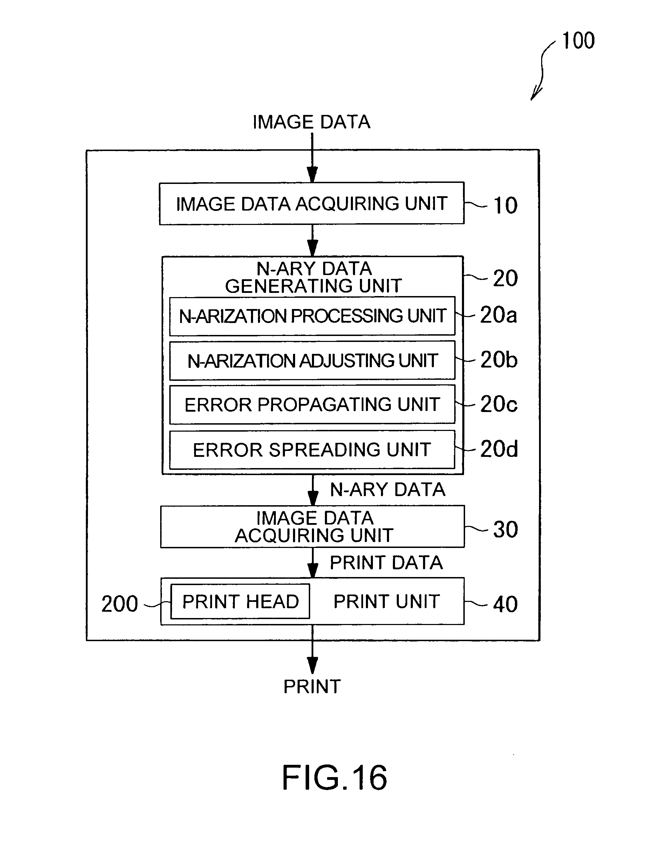

Next, Figs. 16 to Figs. 21A-21D show a second embodiment of the printing device 100, print program, printing method, image processing device, image processing program and image processing method according to the invention.

First, Fig. 16 is a functional block diagram showing the second embodiment of the printing device 100 according to the invention.

As shown in Fig. 16, this printing device 100, substantially similar to the first embodiment, is mainly formed by a print head 200 having plural nozzles, an image data acquiring unit 10 that acquires multi-valued image data to be used for printing, an N-ary data generating unit 20 that N-arizes (N≥2) the multi-valued image data acquired by the image data acquiring unit 10 along the direction of nozzle arrangement in the print head 200 and thus generates N-ary image data, a print data generating unit 30 that generates print data in which a dot size corresponding to each pixel of the N-ary image data generated by the N-ary data generating unit 20 is set, and an ink-jet print unit 40 that executes print based on the print data generated by the print data generating unit 30, using the print head 200.

Of these units, the fundamental functions of the print head 200, the image data acquiring unit 10 and the print data generating unit 30, and the construction and function of the print unit 40 are similar to those in the printing device 100 of the first embodiment, and therefore will not be described further. The N-ary data generating unit 20 will be mainly described.

As shown in Fig. 16, specifically, the N-ary data generating unit 20 in this embodiment includes an N-arization processing unit 20a, an N-arization adjusting unit 20b, an error propagating unit 20c, and an error spreading unit 20d.

This N-arization processing unit 20a provides the most fundamental function of the N-ary data generating unit 20. As in the first embodiment, it provides the function of N-arizing (N≥2) the multi-valued image data acquired by the image data acquiring unit 10 along the nozzle arrangement direction in the print head 200 on the basis of a conversion table 300 showing the relation between pixel value and N-value as shown in Fig. 7 and thus generating N-ary image data.

As described above, the N-value in the N-arization of the multi-valued image data by the N-arization processing unit 20a is not particularly limited. However, in this embodiment, in the case where a quaternary value of N=4 is used and "brightness value" is selected as the pixel value, as in the first embodiment, if the pixel value related to the brightness of the acquired multi-valued image data is expressed by eight bits of 256 (0 to 255) tone levels, pixel values are allocated into four types of N-values in accordance with three threshold values "35", "110" and "200". That is, if the brightness value is within a range of "255" to "201", it is converted to an N-value "1". If the brightness value is within a range of first threshold value "200" to "111", it is converted to an N-value "2". If the brightness value is within a range of second threshold value "110" to "36", it is converted to an N-value "3". If the brightness value is within a range of third threshold value "35" to "0", it is converted to an N-value "4".

The N-arization adjusting unit 20b provides a function of adjusting N-arization of a target pixel when the dot size corresponding to the next pixel in the nozzle arrangement direction is equal to or smaller than a predetermined size. The function will be later described in detail.

The error propagating unit 20c provides a function of propagating an error of pixel value generated in the N-arization by the N-arization adjusting unit 20b, to a neighboring unprocessed pixel on the next line. Thus, change in the tone that might be generated by N-arization adjustment can be avoided, as will be described later.

The error spreading unit 20d provides a function of spreading the error of pixel value to an unprocessed pixel around the target pixel when the target pixel is N-arized. Thus, half tone can be realized with high fidelity by effectively utilizing the error generated by the N-arization, as will be described later.

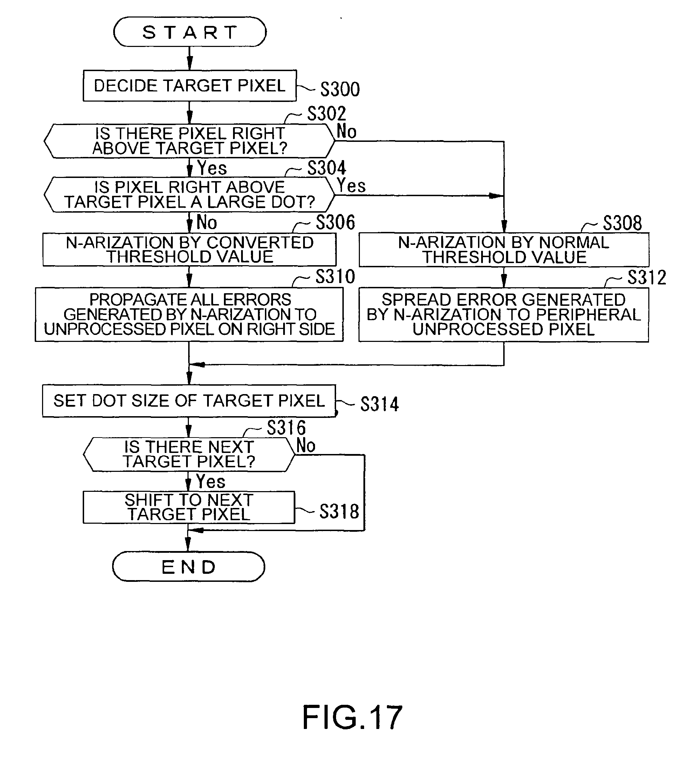

Fig. 17 is a flowchart showing an exemplary flow of print processing according to this embodiment. This embodiment will be described mainly with reference to Fig. 17. The other assumptions and constructions are similar to those of the first embodiment unless particular description is given.

As shown in Fig. 17, first, in this printing device 100, when a predetermined initial operation for print processing is finished after the power is turned on, if a print instruction terminal such as personal computer is connected, the image data acquiring unit 10 monitors whether an explicit print instruction is given from the print instruction terminal or not. If a print instruction is given, the procedure shifts to the first step S300 and the first target pixel on the multi-valued image data to be a processing subject is decided. Then, the procedure shifts to the first judgment step S302.

Again, in the target pixel decision technique in this embodiment, the target pixel is decided in accordance with the target pixel decision flow of Fig. 8, as in the foregoing embodiment.

At step S302, it is judged whether a pixel exists right above the target pixel or not, that is, whether the target pixel is the top pixel in the nozzle arrangement direction on each line or not. If it is judged that the target pixel is the top pixel (No), the procedure jumps over the next step S304 to step S308. If it is judged that the target pixel is not the top pixel (Yes), the procedure shifts to the next step S304.

At step S304, it is judged whether the pixel right above the target pixel is a "large dot" or not. If it is judged that the pixel is not a "large dot" (No), the procedure shifts to step S306. On the other hand, if it is judged that the pixel is a "large dot" (Yes), the procedure shifts to step S308.

At step S306, N-arization of the target pixel is performed using converted thresholds as shown in Figs. 18 and 19. After that, the procedure shifts to step S310 and all the error generated by the N-arization are propagated to the pixel on the right side, that is, the neighboring unprocessed pixel on the next line. Then, the procedure shifts to step S314.

On the other hand, at step S308, N-arization using normal threshold values, that is, N-arization using normal threshold values as shown in Fig. 7 is performed. Then, the procedure shifts to step S312 and the error generated by the N-arization is spread to the periphery in accordance with an error spreading matrix employed in ordinary error spreading processing. After that, the procedure similarly shifts to step S314.

At step S314, a dot of a size corresponding to the N-value that is thus decided is set (allocated). Then, the procedure sequentially goes through steps S316 and S318, thus performing the processing on all the pixels.

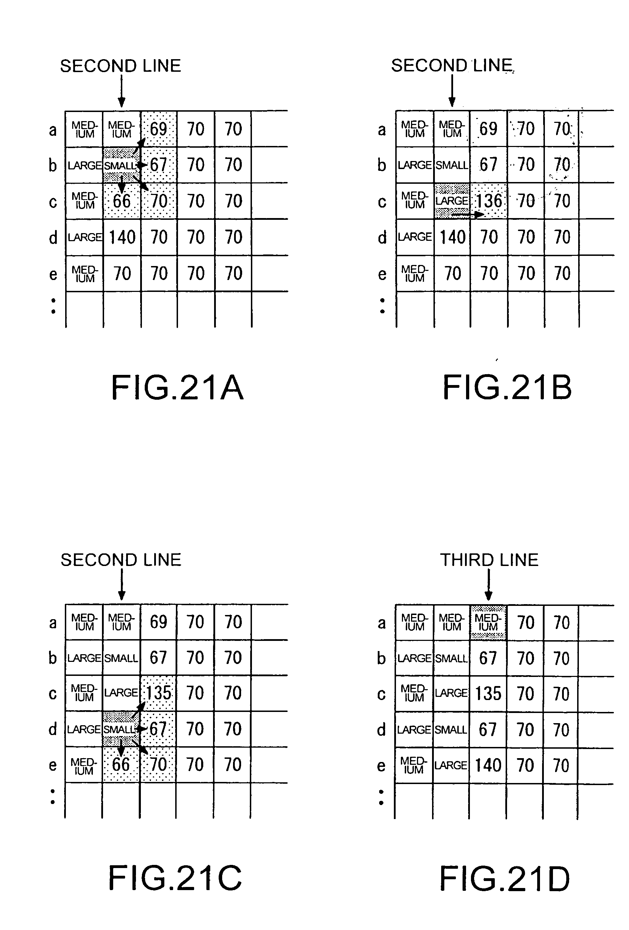

Figs. 20A to 21F and Figs. 21A to 21D are diagrams specifically showing an exemplary flow of such processing for each pixel.

First, as shown in Fig. 20A, it is assumed that the pixel value (brightness value) of all the pixels of the multi-valued image data to be a processing subject is expressed by eight bits and "70" of 256 tone levels.

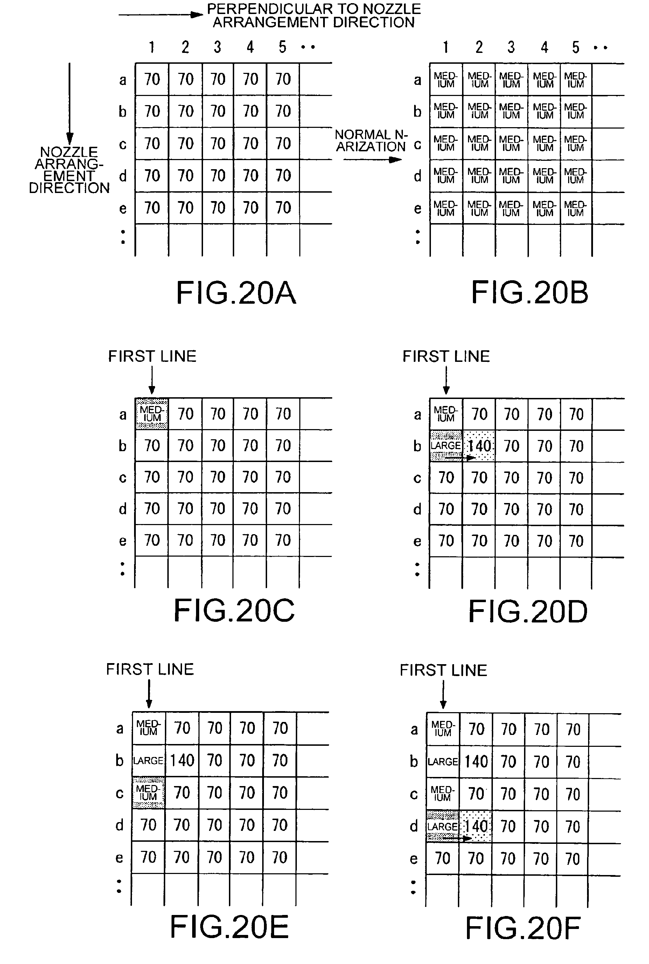

If such multi-valued image data is N-arized using the normal threshold values on the basis of the conversion table 300 as shown in Fig. 7 and dots corresponding to the N-value are decided, the dot size corresponding to all the pixels is "medium dot", as shown in Fig. 20B.

In this manner, when the N-arization using the normal threshold values is performed, if all the pixel values are the same or approximate to each other, all the pixels are converted to dots of the same size. If the dot size is small, white streaks appear clearly on the occurrence of flight curving in some nozzles, as shown in Fig. 12.

On the other hand, in this embodiment, since there is no pixel right above the first target pixel 1a as shown in Fig. 20C, the procedures goes through steps S300, S302, S308, S312 and S314, and in this state, N-arization using the normal threshold values is performed and dots corresponding to the N-value are set.

In the example shown, since the pixel value of the first target pixel 1a is "70", that is, "3"-value, "medium dot" is allotted, which is the dot size corresponding to "3"-value. In the example shown, since no error is generated, error spreading processing is not necessary in this case.

Next, when the processing on the first target pixel 1a is thus finished, the target pixel is shifted to the next pixel 1b and similar processing is performed on the target pixel 1b, as shown in Fig. 20C.

In the example shown, a pixel exists right above the target pixel 1b. However, since the pixel right above the target pixel 1b is not a "large dot", the procedure goes through steps S302, S304 and S306 and N-arization using the converted threshold values is performed.

That is, the pixel value of the target pixel 1b is "70", and if the N-arization using the normal threshold value is performed, "3"-value is provided and "medium dot" is allotted, which is the dot size corresponding to "3"-value. However, in this case, the dot size is forcedly converted to "large dot" in accordance with the N-arization table 300B containing converted threshold values as shown in Fig. 18.

Thus, since the pixel value of the target pixel becomes "0" and an error of "70" is generated, the error "70" is entirely propagated to a neighboring unprocessed pixel on the next line, that is, pixel 2b, as shown in Fig. 20D. Accordingly, the pixel value of the neighboring unprocessed pixel 2b is converted to "140 (=70+70)".

Next, when the processing on the second target pixel 1b is thus finished, the target pixel is shifted to the next pixel 1c and similar processing is performed on the target pixel 1c, as shown in Fig. 20E.

In the example shown, since the pixel right above the target pixel 1c is a "large dot", N-arization using the normal threshold values is performed on the target pixel 1c. As a result, the target pixel 1c is converted to "medium dot".

Moreover, when the processing on the third target pixel 1c is thus finished, the target pixel is shifted to the next pixel 1d and similar processing is performed on the target pixel 1d, as shown in Fig. 20F.

In the example shown, since the pixel right above the target pixel 1d is a "medium dot", N-arization using the converted threshold values is performed on the target pixel 1d. As a result, the target pixel 1d is converted to "large dot" and the generated error is propagated to a neighboring unprocessed pixel 2d. Thus, the pixel value of the neighboring unprocessed pixel 2d changes to "140".

When the processing on all the pixels on the first line is thus finished, the target pixel is shifted to the next line and similar processing is performed on each pixel on the second line, as shown in Fig. 21A.

In the example shown, as a result of performing N-arization using the normal threshold values on the first target pixel 2a on the second line, "medium dot" is set for the first target pixel 2a. As for the next target pixel 2b, since the pixel right above the target pixel 2b is not a "large dot", the procedure goes through steps S302, S304 and S306, and N-arization using the converted threshold values as shown in Fig. 18 is performed.

In the example shown, since the pixel value of the target pixel 2b is "140", even if N-arization using the converted threshold values as shown in Fig. 18 is performed, "2"-value is provided and "small dot" is set, as in the case of N-arization using the normal threshold values. The pixel value of "small dot" is "150", which causes an error of "-10" from the original pixel value "140". In such case, since it is not different from the N-arization using the normal threshold values, though not shown in the flowchart of Fig. 17, the error "-10" is spread to a peripheral unprocessed pixel around the target pixel 2b in accordance with the ordinary error spreading matrix, as shown in Fig. 21A.

In the example shown, a typical error spreading matrix called Freud and Steinberg type is employed. An error generated by N-arization is equally divided into 16 parts. Seven of these are spread to the unprocessed pixel 2c right below the target pixel 2b. One is spread to the unprocessed pixel 3c obliquely below the target pixel 2b on the right side. Five are spread to the unprocessed pixel 3b next and right to the target pixel 2b. Three are spread to the unprocessed pixel 3a obliquely above the target pixel 2b on the right side. As a result, the pixel value of the unprocessed pixel 2c is converted from "70" to "66". The pixel value of the unprocessed pixel 3c is converted from "70" to "70 (rounded up)". The pixel value of the unprocessed pixel 3b is converted from "70" to "67". The pixel value of the unprocessed pixel 3a is converted from "70" to "69".

Next, when the processing on the second target pixel 2b is thus finished, the target pixel shifts to the pixel 2c right below the pixel 2b and similar processing is performed on the target pixel 2c, as shown in Fig. 21B.

In the example shown, the pixel value of the target pixel 2c is "66". However, since the pixel right above the target pixel 2c is not a "large dot", the dot size is converted to "large dot" as a result of performing N-arization using the converted threshold values, as shown in the drawing, and all the pixel value "66" is propagated to the neighboring unprocessed pixel 3c on the next line. Then, the processing ends.

Moreover, as a result of shifting to the next target pixel 2d and performing similar processing, as shown in Fig. 21C, since the pixel 2c right above the target pixel 2d is a "large dot", N-arization using the normal threshold values is performed and the dot size is converted to "small dot" and the error is spread to the peripheral unprocessed pixels.

After that, similar processing is repeated, and when the processing on all the pixels on the second line is finished, the processing shifts to the third line, which is the next line, and similar processing is repeated sequentially from the top pixel 3a, as shown in Fig. 21D.

When print is executed on the basis of the print data thus acquired, "small or medium dots" do not continue in the nozzle arrangement direction, as in Fig. 12 showing the first embodiment, and the two white streaks generated between "small or medium dots" are eliminated almost perfectly.

Also, the dot next to a "large dot" becomes a "small or medium dot", and "large dots" do not continue vertically or horizontally. Therefore, it can be seen that the overall tone of the image does not significantly change and that substantially the same tone as the original tone is maintained.

In this manner, according to the invention, in the N-arization of multi-valued image data, if dots of a predetermined size or less continue when normal N-arization is performed, the N-value is adjusted to prevent continuation of dots of the predetermined size or less, and an error generated by the adjustment is propagated to a neighboring unprocessed pixel on the next line. Therefore, it is possible to avoid occurrence of white streaks due to the continuation of dots of the predetermined size or less, as in the first embodiment, and to maintain substantially the same area tone as the original area tone in the part where dot size conversion is performed. Thus, a print of high quality with less density difference can be provided.

Also, since the error is distributed at the stage of N-arization, the processing to change the dot size is not necessary and the processing efficiency improves.

In this embodiment, an example using the brightness value as the pixel value is described. However, as the N-arization table containing converted threshold values in the case of using the density value as the pixel value, the N-arization table 300C containing no "small dot" as shown in Fig. 19 is employed.

Also in this embodiment, as in the first embodiment, the conventional ink-jet print head 200 and the print unit 40 (printer) can be utilized without modification.

Therefore, if the print head 200 and the print unit 40 are separated from the construction of Fig. 16, their functions can be realized simply by a general purpose information processing device (image processing device) such as personal computer.

It is also a matter of course that the invention can be applied not only to the flight curving phenomenon but also totally similarly to the case where the direction of ink ejection is vertical (normal) but the nozzle forming position is deviated from its regular position and therefore the same result as the flight curving phenomenon occurs in the formed dot. Moreover, the invention can be similarly applied to such a failure that ink is not ejected from a specific nozzle.

This embodiment can be applied not only to a line-head ink jet printer but also to a multipath ink jet printer.

The N-ary data generating unit 20 in this embodiment corresponds to the N-ary data generating unit according to mode 3 or the like in the description of the means for solving the problems. The N-arization adjusting unit 20b, the error propagating unit 20c and the error spreading unit 20d similarly correspond to the N-arization adjusting unit, the error propagating unit and the error spreading unit according to mode 3 or the like in the description of the means for solving the problems.

Also in this embodiment, as in the first embodiment, image data is converted to print data in accordance with the print head characteristics, almost without modifying the exiting print head 200 and print unit 40. Therefore, it is not necessary to prepare particularly dedicated print head 200 or print unit 40, and the conventional ink-jet print head 200 and print unit 40 (printer) can be utilized without any modification. Thus, if the print head 200 and the print unit 40 are separated, their functions can be realized simply by a general-purpose information processing device (image processing device) such as personal computer.

Also, each unit for realizing the printing device 100 according to this embodiment can be realized on software using a computer system incorporated in most of the existing printing devices. Its computer program can be incorporated in a product as it is stored in a semiconductor ROM in advance, distributed through a network such as the Internet, or stored in a computer-readable storage medium R such as CD-ROM, DVD-ROM or FD as shown in Fig. 15, and thus can be easily provided to a user who wants the program.
The aforegoing description has been given by way of example only and it will be appreciated by a person skilled in the art that modifications can be made without departing from the scope of the present invention.

## Claims

1. A printing device comprising:
an N-ary data generating unit that N-arizes (N≥2) image data, which is a set of M-ary pixel values (M>N) forming an image, for each pixel and thus generates N-ary image data;
a print data generating unit that generates print data in which a dot size corresponding to each of the pixel values of the N-ary image data generated by the N-ary data generating unit is set; and
a print unit that executes print based on the print data generated by the print data generating unit;
wherein when a dot size of a predetermined range continues in the print data, the print data generating unit generates print data in which the dot size corresponding to one of the pixels of the continuous dots is changed.

2. A printing device comprising:
an N-ary data generating unit that N-arizes (N≥2) image data, which is a set of M-ary pixel values (M>N) forming an image, for each pixel and thus generates N-ary image data;
a print data generating unit that generates print data in which a dot size corresponding to each of the pixel values of the N-ary image data generated by the N-ary data generating unit is set; and
a print unit that executes print based on the print data generated by the print data generating unit;
wherein when a dot size smaller than a predetermined size continues in the print data, the print data generating unit generates print data in which the dot size corresponding to one of the pixels of the continuous dots is changed to the predetermined size or larger.

3. A printing device comprising:
an N-ary data generating unit that N-arizes (N≥2) image data, which is a set of M-ary pixel values (M>N) forming an image, for each pixel and thus generates N-ary image data;
a print data generating unit that generates print data in which a dot size corresponding to each of the pixel values of the N-ary image data generated by the N-ary data generating unit is set; and
a print unit that executes print based on the print data generated by the print data generating unit;
wherein the print data generating unit has a dot size changing unit that changes the dot size of one of the pixels of the continuous dots to a predetermined size or larger when dots smaller than the predetermined size continue in the print data, an error propagating unit that propagates an error of pixel value of the pixel generated by the dot size change by the dot size changing unit to an unprocessed pixel, and a dot size resetting unit that resets the dot size of the pixel to which the error is propagated by the error propagating unit.

4. A printing device comprising:
an N-ary data generating unit that N-arizes (N≥2) image data, which is a set of M-ary pixel values (M>N) forming an image, for each pixel and thus generates N-ary image data;
a print data generating unit that generates print data in which a dot size corresponding to the pixel value of the N-ary image data generated by the N-ary data generating unit is set; and
a print unit that executes print based on the print data generated by the print data generating unit;
wherein the N-ary data generating unit has an N-arization adjusting unit that adjusts the N-arization of the pixel value when dots are arranged next to each other with the dot size corresponding to the pixel value being equal to or less than a predetermined size, and an error propagating unit that propagates to an unprocessed pixel an error of pixel value generated when the N-arization is performed by the N-arization adjusting unit.

5. A printing device comprising:
an N-ary data generating unit that N-arizes (N≥2) image data, which is a set of M-ary pixel values (M>N) forming an image, for each pixel and thus generates N-ary image data;
a print data generating unit that generates print data in which a dot size corresponding to the pixel value of the N-ary image data generated by the N-ary data generating unit is set; and
a print unit that executes print based on the print data generated by the print data generating unit;
wherein the N-ary data generating unit has an N-arization adjusting unit that adjusts the N-arization when dots are arranged next to each other with the dot size corresponding to the pixel value being within a predetermined range, and an error propagating unit that propagates to an unprocessed pixel an error of pixel value generated when the N-arization is performed by the N-arization adjusting unit.

6. The printing device as claimed in claims 4 or 5, wherein the N-ary data generating unit further has an error spreading unit that, when a target pixel of the image data is N-arized, spreads the error of pixel value to an unprocessed pixel around the target pixel.

7. A print program **characterized by** causing a computer to function as:
an N-ary data generating unit that N-arizes (N≥2) image data, which is a set of M-ary pixel values (M>N) forming an image, for each pixel and thus generates N-ary image data; and
a print data generating unit that generates print data in which a dot size corresponding to each of the pixel values of the N-ary image data generated by the N-ary data generating unit is set;
the program also causing the print data generating unit to function, when a dot size of a predetermined range continues in the print data, to generate print data in which the dot size corresponding to one of the pixels of the continuous dots is changed.

8. A print program **characterized by** causing a computer to function as:
an N-ary data generating unit that N-arizes (N≥2) image data, which is a set of M-ary pixel values (M>N) forming an image, for each pixel and thus generates N-ary image data; and
a print data generating unit that generates print data in which a dot size corresponding to each of the pixel values of the N-ary image data generated by the N-ary data generating unit is set;
the program also causing the print data generating unit to function, when a dot size smaller than a predetermined size continues in the print data, to generate print data in which the dot size corresponding to one of the pixels of the continuous dots is changed to the predetermined size or larger.

9. A print program **characterized by** causing a computer to function as:
an N-ary data generating unit that N-arizes (N≥2) image data, which is a set of M-ary pixel values (M>N) forming an image, for each pixel and thus generates N-ary image data; and
a print data generating unit that generates print data in which a dot size corresponding to each of the pixel values of the N-ary image data generated by the N-ary data generating unit is set;
the program also causing the print data generating unit to function as: a dot size changing unit that, when a dot size smaller than a predetermined size continues in the print data, changes the dot size corresponding to one of the pixels of the continuous dots to the predetermined dot size or larger; an error propagating unit that propagates an error of pixel value of the pixel generated by the dot size change by the dot size changing unit to an unprocessed pixel; and a dot size resetting unit that resets the dot size of the pixel to which the error is propagated by the error propagating unit.

10. A print program **characterized by** causing a computer to function as:
an N-ary data generating unit that N-arizes (N≥2) image data, which is a set of M-ary pixel values (M>N) forming an image, for each pixel and thus generates N-ary image data; and
a print data generating unit that generates print data in which a dot size corresponding to the pixel value of the N-ary image data generated by the N-ary data generating unit is set;
the program also causing the N-ary data generating unit to function as: an N-arization adjusting unit that adjusts the N-arization of the pixel value when dots are arranged next to each other with the dot size corresponding to the pixel value being equal to or less than a predetermined size, and an error propagating unit that propagates to an unprocessed pixel an error of pixel value generated when the N-arization is performed by the N-arization adjusting unit.

11. A print program **characterized by** causing a computer to function as:
an N-ary data generating unit that N-arizes (N≥2) image data, which is a set of M-ary pixel values (M>N) forming an image, for each pixel and thus generates N-ary image data; and
a print data generating unit that generates print data in which a dot size corresponding to the pixel value of the N-ary image data generated by the N-ary data generating unit is set; and
a print unit that execute print based on the print data generated by the print data generating unit;
the program also causing the N-ary data generating unit to function as: an N-arization adjusting unit that adjusts the N-arization of the pixel value when dots are arranged next to each other with the dot size corresponding to the pixel value being within a predetermined range, and an error propagating unit that propagates to an unprocessed pixel an error of pixel value generated when the N-arization is performed by the N-arization adjusting unit.

12. A computer-readable storage medium storing the print program as claimed in claim any of claims 6 through 1 1.

13. A printing method comprising:
N-arizing (N≥2) image data, which is a set of M-ary pixel values (M>N) forming an image, for each pixel and thus generating N-ary image data;
generating print data in which a dot size corresponding to each of the pixel values of the N-ary image data generated by the generation of the N-ary data is set; and
executing print based on the print data generated by the generation of the print data;
wherein the generation of the print data includes, when a dot size of a predetermined range continues in the print data, generating print data in which the dot size corresponding to one of the pixels of the continuous dots is changed.

14. A printing method comprising:
N-arizing (N≥2) image data, which is a set of M-ary pixel values (M>N) forming an image, for each pixel and thus generating N-ary image data;
generating print data in which a dot size corresponding to each of the pixel values of the N-ary image data generated by the generation of the N-ary data is set; and
executing print based on the print data generated by the generation of the print data;
wherein the generation of the print data includes, when a dot size smaller than a predetermined size continues in the print data, generating print data in which the dot size corresponding to one of the pixels of the continuous dots is changed to the predetermined size or larger.

15. A printing method comprising:
N-arizing (N≥2) image data, which is a set of M-ary pixel values (M>N) forming an image, for each pixel and thus generating N-ary image data;
generating print data in which a dot size corresponding to each of the pixel values of the N-ary image data generated by the generation of the N-ary data is set; and
executing print based on the print data generated by the generation of the print data;
wherein the generation of the print data includes, when a dot size smaller than a predetermined size continues in the print data, changing the dot size corresponding to one of the pixels of the continuous dots to the predetermined size or larger, propagating an error of pixel value of the pixel generated by the dot size change to an unprocessed pixel, and resetting the dot size of the pixel to which the error is propagated.

16. A printing method comprising:
N-arizing (N≥2) image data, which is a set of M-ary pixel values (M>N) forming an image, for each pixel and thus generating N-ary image data;
generating print data in which a dot size corresponding to the pixel value of the N-ary image data generated by the generation of the N-ary data is set; and
executing print based on the print data generated by the generation of the print data;
wherein the generation of the N-ary data includes adjusting the N-arization of the pixel value when dots are arranged next to each other with the dot size corresponding to the pixel value being equal to or less than a predetermined size, and propagating to a next unprocessed pixel an error of pixel value generated when the N-arization is performed by the N-arization adjustment.

17. A printing method comprising:
N-arizing (N≥2) image data, which is a set of M-ary pixel values (M>N) forming an image, for each pixel and thus generating N-ary image data;
generating print data in which a dot size corresponding to the pixel value for each target pixel of the N-ary image data generated by the generation of the N-ary data is set; and
executing print based on the print data generated by the generation of the print data;
wherein the generation of the N-ary data includes adjusting the N-arization of the pixel value when the dot size corresponding to the pixels next to each other in the print data is equal to or less than a predetermined size, and propagating to an unprocessed pixel an error of pixel value generated when the N-arization is performed by the N-arization adjustment.

18. An image processing device comprising:
an N-ary data generating unit that N-arizes (N≥2) image data, which is a set of M-ary pixel values (M>N) forming an image, for each pixel and thus generates N-ary image data; and
a print data generating unit that generates print data in which a dot size corresponding to each of the pixel values of the N-ary image data generated by the N-ary data generating unit is set;
wherein when a dot size of a predetermined range continues in the print data, the print data generating unit generates print data in which the dot size corresponding to one of the pixels of the continuous dots is changed.

19. An image processing device comprising:
an N-ary data generating unit that N-arizes (N≥2) image data, which is a set of M-ary pixel values (M>N) forming an image, for each pixel and thus generates N-ary image data; and
a print data generating unit that generates print data in which a dot size corresponding to each of the pixel values of the N-ary image data generated by the N-ary data generating unit is set;
wherein when a dot size smaller than a predetermined size continues in the print data, the print data generating unit generates print data in which the dot size corresponding to one of the pixels of the continuous dots is changed to the predetermined size or larger.

20. An image processing device comprising:
an N-ary data generating unit that N-arizes (N≥2) image data, which is a set of M-ary pixel values (M>N) forming an image, for each pixel and thus generates N-ary image data; and
a print data generating unit that generates print data in which a dot size corresponding to each of the pixel values of the N-ary image data generated by the N-ary data generating unit is set;
wherein the print data generating unit has a dot size changing unit that changes the dot size of one of the pixels of the continuous dots to a predetermined size or larger when dots smaller than the predetermined size continue in the print data, an error propagating unit that propagates an error of pixel value of the pixel generated by the dot size change by the dot size changing unit to an unprocessed pixel, and a dot size resetting unit that resets the dot size of the pixel to which the error is propagated by the error propagating unit.

21. An image processing device comprising:
an N-ary data generating unit that N-arizes (N≥2) image data, which is a set of M-ary pixel values (M>N) forming an image, for each pixel and thus generates N-ary image data; and
a print data generating unit that generates print data in which a dot size corresponding to the pixel value of the N-ary image data generated by the N-ary data generating unit is set;
wherein the N-ary data generating unit has an N-arization adjusting unit that adjusts the N-arization of the pixel value when dots are arranged next to each other with the dot size corresponding to the pixel value being equal to or less than a predetermined size, and an error propagating unit that propagates to an unprocessed pixel an error of pixel value generated when the N-arization is performed by the N-arization adjusting unit.

22. An image processing device comprising:
an N-ary data generating unit that N-arizes (N≥2) image data, which is a set of M-ary pixel values (M>N) forming an image, for each pixel and thus generates N-ary image data; and
a print data generating unit that generates print data in which a dot size corresponding to the pixel value of the N-ary image data generated by the N-ary data generating unit is set;
wherein the N-ary data generating unit has an N-arization adjusting unit that adjusts the N-arization when dots are arranged next to each other with the dot size corresponding to the pixel value being within a predetermined range, and an error propagating unit that propagates to an unprocessed pixel an error of pixel value generated when the N-arization is performed by the N-arization adjusting unit.

23. An image processing program **characterized by** causing a computer to function as:
an N-ary data generating unit that N-arizes (N≥2) image data, which is a set of M-ary pixel values (M>N) forming an image, for each pixel and thus generates N-ary image data; and
a print data generating unit that generates print data in which a dot size corresponding to each of the pixel values of the N-ary image data generated by the N-ary data generating unit is set;
the program also causing the print data generating unit to function, when a dot size of a predetermined range continues in the print data, to generate print data in which the dot size corresponding to one of the pixels of the continuous dots is changed.

24. An image processing program **characterized by** causing a computer to function as:
an N-ary data generating unit that N-arizes (N≥2) image data, which is a set of M-ary pixel values (M>N) forming an image, for each pixel and thus generates N-ary image data; and
a print data generating unit that generates print data in which a dot size corresponding to each of the pixel values of the N-ary image data generated by the N-ary data generating unit is set,
the program also causing the print data generating unit to function, when a dot size smaller than a predetermined size continues in the print data, to generate print data in which the dot size corresponding to one of the pixels of the continuous dots is changed to the predetermined size or larger.

25. An image processing program **characterized by** causing a computer to function as:
an N-ary data generating unit that N-arizes (N≥2) image data, which is a set of M-ary pixel values (M>N) forming an image, for each pixel and thus generates N-ary image data; and
a print data generating unit that generates print data in which a dot size corresponding to each of the pixel values of the N-ary image data generated by the N-ary data generating unit is set;
the program also causing the print data generating unit to function as: a dot size changing unit that, when a dot size smaller than a predetermined size continues in the print data, changes the dot size corresponding to one of the pixels of the continuous dots to the predetermined dot size or larger; an error propagating unit that propagates an error of pixel value of the pixel generated by the dot size change by the dot size changing unit to an unprocessed pixel; and a dot size resetting unit that resets the dot size of the pixel to which the error is propagated by the error propagating unit.

26. An image processing program **characterized by** causing a computer to function as:
an N-ary data generating unit that N-arizes (N≥2) image data, which is a set of M-ary pixel values (M>N) forming an image, for each pixel and thus generates N-ary image data; and
a print data generating unit that generates print data in which a dot size corresponding to the pixel value of the N-ary image data generated by the N-ary data generating unit is set;
the program also causing the N-ary data generating unit to function as: an N-arization adjusting unit that adjusts the N-arization of the pixel value when dots are arranged next to each other with the dot size corresponding to the pixel value being equal to or less than a predetermined size, and an error propagating unit that propagates to an unprocessed pixel an error of pixel value generated when the N-arization is performed by the N-arization adjusting unit.

27. An image processing program **characterized by** causing a computer to function as:
an N-ary data generating unit that N-arizes (N≥2) image data, which is a set of M-ary pixel values (M>N) forming an image, for each pixel and thus generates N-ary image data; and
a print data generating unit that generates print data in which a dot size corresponding to the pixel value of the N-ary image data generated by the N-ary data generating unit is set;
the program also causing the N-ary data generating unit to function as: an N-arization adjusting unit that adjusts the N-arization of the pixel value when dots are arranged next to each other with the dot size corresponding to the pixel value being within a predetermined range, and an error propagating unit that propagates to an unprocessed pixel an error of pixel value generated when the N-arization is performed by the N-arization adjusting unit.

28. An image processing method comprising:
N-arizing (N≥2) image data, which is a set of M-ary pixel values (M>N) forming an image, for each pixel and thus generating N-ary image data; and
generating print data in which a dot size corresponding to each of the pixel values of the N-ary image data generated by the generation of the N-ary data is set;
wherein the generation of the print data includes, when a dot size of a predetermined range continues in the print data, generating print data in which the dot size corresponding to one of the pixels of the continuous dots is changed.

29. An image processing method comprising:
N-arizing (N≥2) image data, which is a set of M-ary pixel values (M>N) forming an image, for each pixel and thus generating N-ary image data; and
generating print data in which a dot size corresponding to each of the pixel values of the N-ary image data generated by the generation of the N-ary data is set;
wherein the generation of the print data includes, when a dot size smaller than a predetermined size continues in the print data, generating print data in which the dot size of the pixel corresponding to one of the continuous dots is changed to the predetermined size or larger.

30. An image processing method comprising:
N-arizing (N≥2) image data, which is a set of M-ary pixel values (M>N) forming an image, for each pixel and thus generating N-ary image data; and
generating print data in which a dot size corresponding to each of the pixel values of the N-ary image data generated by the generation of the N-ary data is set;
wherein the generation of the print data includes, when a dot size smaller than a predetermined size continues in the print data, changing the dot size corresponding to one of the pixels of the continuous dots to the predetermined size or larger, propagating an error of pixel value of the pixel generated by the dot size change processing to an unprocessed pixel, and resetting the dot size of the pixel to which the error is propagated by the error propagation.

31. An image processing method comprising:
N-arizing (N≥2) image data, which is a set of M-ary pixel values (M>N) forming an image, for each pixel and thus generating N-ary image data; and
generating print data in which a dot size corresponding to the pixel value of the N-ary image data generated by the generation of the N-ary data is set;
wherein the generation of the N-ary data includes adjusting the N-arization of the pixel value when dots are arranged next to each other with the dot size corresponding to the pixel value being equal to or less than a predetermined size, and propagating to an unprocessed pixel an error of pixel value generated when the N-arization is performed by the N-arization adjustment.

32. An image processing method comprising:
N-arizing (N≥2) image data, which is a set of M-ary pixel values (M>N) forming an image, for each pixel and thus generating N-ary image data; and
generating print data in which a dot size corresponding to the pixel value of the N-ary image data generated by the generation of the N-ary data is set;
wherein the generation of the N-ary data includes adjusting the N-arization of the pixel value when the dots are arranged next to each other with the dot size corresponding to the pixel value being within a predetermined range, and propagating to an unprocessed pixel an error of pixel value generated when the N-arization is performed by the N-arization adjustment.
